# EUROPEAN PATENT APPLICATION

(11) **EP 4 625 099 A1**
(43) Date of publication of application: **01.10.2025**
(21) Application number: 24223720.4
(22) Date of filing: 30.12.2024
(51) Int. Cl.: G06F 1/16, G06F 3/046, G09F 9/30

(54) **DIGITIZER AND DISPLAY DEVICE INCLUDING THE SAME**

(30) Priority: 27.03.2024 KR 20240041632
(71) Applicant: Samsung Display Co., Ltd., Yongin-si, Gyeonggi-do 17113 (KR)
(72) Inventor: NA, Hyun Jae, Yongin-si (KR); LEE, Young Jin, Yongin-si (KR); JANG, Seok Won, Yongin-si (KR); CHO, Sun Haeng, Yongin-si (KR)
(74) Representative: Marks & Clerk LLP

(57) **Abstract**

A digitizer includes, a folding portion including a first hole, a second hole on one side of the first hole, and a third hole on one side of the first hole and the second hole, a first non-folding portion on one side, a second non-folding portion on the other side, a first loop group containing loops having a long side, and a second loop group containing loops having a long side, wherein the folding portion includes a first row in which the first hole and the third hole overlap and a second row in which the second hole and the third hole overlap, among the loops in the first loop group, each loop which at least partially overlaps the folding portion includes lines crossing the folding portion along the first row or the second row, and the lines are in equal numbers in the first row and the second row.

## Description

### BACKGROUND

### 1. Field

Aspects of some embodiments of the present disclosure relate to a digitizer and a display device including the same.

### 2. Description of the Related Art

With the advance of information-oriented society, more and more demands are placed on display devices for displaying information in various ways. For example, display devices may be employed in various electronic devices such as smartphones, digital cameras, laptop computers, navigation devices, and smart televisions.

Recently, a flexible display device having a relatively wide display screen while increasing portability or space utilization of a display device by using a material with flexible characteristics is in the spotlight. In one example, a bendable display device in which a display panel is bendable, a rollable display device in which a display panel is rollable, and a foldable display device in which a display panel is foldable have been developed.

Further, some recent display devices support touch input using a part of a user's body (e.g., a finger) and touch input using an electronic pen (e.g., a stylus pen). The touch input using the electronic pen allows the display device to detect the touch input more sensitively than the touch input using only a part of a user's body.

The above information disclosed in this Background section is only for enhancement of understanding of the background and therefore the information discussed in this Background section does not necessarily constitute prior art.

### SUMMARY

Aspects of some embodiments of the present disclosure include a digitizer that may prevent or reduce the occurrence of an unrecognized area and a display device including the same.

Aspects of some embodiments of the present disclosure include a digitizer that may be capable of sensing an external input and has relatively improved folding characteristics and a display device including the same.

Aspects of some embodiments of the present disclosure include a digitizer that minimizes or reduces the occurrence of cracks in the digitizer's wiring when a display device is folded, and a display device including the same.

However, aspects of embodiments of the present disclosure are not restricted to those set forth herein. The above and other aspects of embodiments according to the present disclosure will become more apparent to one of ordinary skill in the art to which the present disclosure pertains by referencing the detailed description of the present disclosure given below.

According to some embodiments of the present disclosure, a digitizer includes, a folding portion including a first hole, a second hole on one side of the first hole in a first direction, and a third hole on one side of the first hole and the second hole in a second direction different from the first direction, a first non-folding portion on one side of the folding portion in the second direction, a second non-folding portion on the other side of the folding portion in the second direction, a first loop group containing a plurality of loops having a long side in the first direction, and a second loop group containing a plurality of loops having a long side in the second direction, wherein the folding portion includes a first row in which the first hole and the third hole overlap in the second direction and a second row in which the second hole and the third hole overlap in the second direction, among the plurality of loops contained in the first loop group, each of a plurality of loops which at least partially overlap the folding portion includes a plurality of lines crossing the folding portion along the first row or the second row, and the plurality of lines are arranged in equal numbers in the first row and the second row.

According to some embodiments, the first loop group contains a first loop, and a long side of the first loop overlaps the first non-folding portion and the second non-folding portion.

According to some embodiments, a part of a short side of the first loop is in the first row, and a remaining part of the short side of the first loop is in the second row

According to some embodiments, the first loop group contains a second loop, and a part of a long side of the second loop overlaps the first non-folding portion, and the remaining part thereof overlaps the folding portion.

According to some embodiments, a part of a short side of the second loop is in the first row, and a remaining part of the short side of the second loop is in the second row.

According to some embodiments, a part of a long side of the second loop overlapping the folding portion crosses at least a part of the first row, and a remaining part of the long side of the second loop overlapping the folding portion crosses at least a part of the second row.

According to some embodiments, the second loop group contains a third loop, and a long side of the third loop is in the first row.

According to some embodiments, the second loop group contains a fourth loop, and a part of a long side of the fourth loop is in the first row, and a remaining part of the long side of the fourth loop is in the second row.

According to some embodiments, the digitizer may further comprise, at least one base layer containing a reinforcing fiber, and at least one wiring layer on the base layer, wherein the plurality of loops of each of the first loop group and the second loop group comprise a plurality of lines extending in the first direction and the second direction, respectively, and the plurality of lines are in the wiring layer.

According to some embodiments, the base layer comprises a first base layer, a second base layer on one surface of the first base layer, and a third base layer on the other surface of the first base layer, the wiring layer comprises a first wiring layer between the first base layer and the second base layer, a second wiring layer between the first base layer and the third base layer, and a third wiring layer on the second base layer, and the plurality of lines are distributed and in the first to third wiring layers.

According to some embodiments, a maximum number of the plurality of lines in any one of the first to third wiring layers and between the first hole and the second hole in the first direction is six.

According to some embodiments, the wiring layer further comprises a fourth wiring layer on the third base layer, and a maximum number of the plurality of lines in any one of the first to fourth wiring layers and between the first hole and the second hole in the first direction is four.

According to some embodiments, the reinforcing fiber is glass fiber-reinforced plastic.

According to some embodiments, each of the plurality of loops contained in the first loop group and the second loop group comprises at least two or more rings.

According to some embodiments of the present disclosure, a display device includes, a display panel, and a digitizer on the display panel, and including a folding portion including a first hole in a first row and a second hole in a second row located on one side of the first row in a first direction, a first loop group including a plurality of loops having a long side in the first direction, and a second loop group including a plurality of loops having a long side in a second direction different from the first direction, wherein among the plurality of loops contained in the first loop group, each of a plurality of loops which at least partially overlap the folding portion includes a plurality of lines crossing the folding portion along the first row or the second row, and the plurality of lines are arranged in equal numbers in the first row and the second row.

According to some embodiments of the present disclosure, a digitizer includes, a folding portion including a central part extending in a first direction, and a peripheral part on both sides of the central part in a second direction different from the first direction, a first loop group containing a plurality of loops having a long side in the first direction, a second loop group containing a plurality of loops having a long side in the second direction, at least one base layer containing a reinforcing fiber, and a plurality of wiring layers on the base layer, wherein among the plurality of loops contained in the first loop group, each of a plurality of loops which at least partially overlap the folding portion includes a long-side line extending in the first direction and a short-side line extending in the second direction, among the plurality of loops contained in the second loop group, each of a plurality of loops which at least partially overlap the folding portion includes a long-side line extending in the second direction, the long-side line and the short-side line included in the first loop group, and the long-side line included in the second loop group are in the plurality of wiring layers, and the long-side line included in the first loop group is in a lowermost layer among the plurality of wiring layers.

According to some embodiments, the long-side line comprised in the first loop group is in the peripheral part.

According to some embodiments, the long-side line comprised in the first loop group crosses the peripheral part in the second direction and then extends in the first direction.

According to some embodiments, the short-side line comprised in the first loop group and the long-side line comprised in the second loop group are in a layer higher than the lowermost layer.

According to some embodiments, no line is at the central part of the lowermost layer.

According to some embodiments, the base layer comprises a first base layer, a second base layer on one surface of the first base layer, and a third base layer on the other surface of the first base layer, the wiring layer comprises a first wiring layer between the first base layer and the second base layer, a second wiring layer between the first base layer and the third base layer, and a third wiring layer on the second base layer, and the long-side line comprised in the first loop group is in the second wiring layer.

According to some embodiments, the base layer comprises a first base layer, a second base layer on one surface of the first base layer, and a third base layer on the other surface of the first base layer, the wiring layer comprises a first wiring layer between the first base layer and the second base layer, a second wiring layer between the first base layer and the third base layer, a third wiring layer on the second base layer, and a fourth wiring layer on the third base layer, and the long-side line comprised in the first loop group is in the fourth wiring layer.

According to some embodiments, the lowermost layer is a layer adjacent to a surface facing outward when the folding portion is folded among the plurality of wiring layers.

According to some embodiments of the present disclosure, a display device includes, a display panel, and a digitizer on the display panel, wherein the digitizer includes, a folding portion including a central part, and a peripheral part on both sides of the central part, a first loop group containing a plurality of loops having a long side in a first direction, a second loop group containing a plurality of loops having a long side in a second direction different from the first direction, at least one base layer containing a reinforcing fiber, and a plurality of wiring layers on the base layer, wherein among the plurality of loops contained in the first loop group, each of a plurality of loops which at least partially overlap the folding portion includes a long-side line extending in the first direction and a short-side line extending in the second direction, among the plurality of loops contained in the second loop group, each of a plurality of loops which at least partially overlap the folding portion includes a long-side line extending in the second direction, the long-side line and the short-side line included in the first loop group, and the long-side line included in the second loop group are in the plurality of wiring layers, and the long-side line included in the first loop group is in a lowermost layer among the plurality of wiring layers.

In a digitizer and the display device including the same according to some embodiments of the present disclosure, the occurrence of an unrecognized area may be prevented or reduced.

In a digitizer and the display device including the same according to some embodiments of the present disclosure, the folding characteristics of the digitizer that senses an external input may be relatively improved.

In a digitizer and the display device including the same according to some embodiments of the present disclosure, it may be possible to minimize or reduce the occurrence of cracks in the digitizer's wiring when the display device is folded.

However, characteristics of embodiments according to the present disclosure are not limited to those described above and various other characteristics are incorporated herein.

At least some of the above and other features of the invention are set out in the claims.

### BRIEF DESCRIPTION OF THE DRAWINGS

The above and other characteristics and features of embodiments according to the present disclosure will become more apparent by describing in more detail aspects of some embodiments thereof with reference to the attached drawings, in which:
FIG. 1 is a perspective view illustrating a display device in an unfolded state according to some embodiments;
FIG. 2 is a perspective view illustrating a display device in a folded state according to some embodiments;
FIG. 3 is a perspective view illustrating a display device in an unfolded state according to some embodiments;
FIG. 4 is a perspective view illustrating a display device in a folded state according to some embodiments;
FIG. 5 is an exploded perspective view showing an example of a display device according to some embodiments;
FIG. 6 is a cross-sectional view taken along the line I-I' of FIG. 5;
FIG. 7 is a cross-sectional view illustrating an example of a display panel according to some embodiments;
FIG. 8 is a plan view showing a front surface of a digitizer according to some embodiments;
FIG. 9 is a rear view showing a back surface of a digitizer according to some embodiments;
FIG. 10 is a cross-sectional view taken along the line II-II' of FIG. 8;
FIG. 11 is a cross-sectional view taken along the line III-III' of FIG. 8;
FIG. 12 is a cross-sectional view showing a base layer of a digitizer according to some embodiments;
FIG. 13 is a plan view showing a base layer of a digitizer according to some embodiments;
FIG. 14 is a plan view showing horizontal loops according to some embodiments;
FIGS. 15 and 16 are plan views showing vertical loops according to some embodiments;
FIGS. 17 to 20 are enlarged plan views showing loop lines respectively arranged in first to fourth wiring layers in area A of FIG. 8;
FIG. 21A is a cross-sectional view showing a peripheral part of a folding portion taken along the line IV-IV' of FIG. 17 to 20;
FIG. 21B is a cross-sectional view showing a central part of a folding portion taken along the line V-V' of FIGS. 17 to 20;
FIGS. 22 to 24 are enlarged plan views showing loop lines respectively arranged in first to fourth wiring layers of a display device according to some embodiments in the area A of FIG. 8;
FIG. 25A is a cross-sectional view showing a peripheral part of a folding portion taken along the line VI-VI' of FIGS. 22 to 24; and
FIG. 25B is a cross-sectional view showing a central part of a folding portion taken along the line VII-VII of FIGS. 22 to 24.

### DETAILED DESCRIPTION

Aspects of some embodiments of the present disclosure will now be described more fully hereinafter with reference to the accompanying drawings, in which aspects of some embodiments of the invention are shown. This invention may, however, be embodied in different forms and should not be construed as limited to the embodiments set forth herein. Rather, these embodiments are provided so that this disclosure will be thorough and complete, and will filly convey the scope of the invention to those skilled in the art.

It will also be understood that when a layer is referred to as being "on" another layer or substrate, it can be directly on the other layer or substrate, or intervening layers may also be present. The same reference numbers indicate the same components throughout the specification.

Hereinafter, aspects of some embodiments of the present disclosure will be described in more detail with reference to the accompanying drawings.

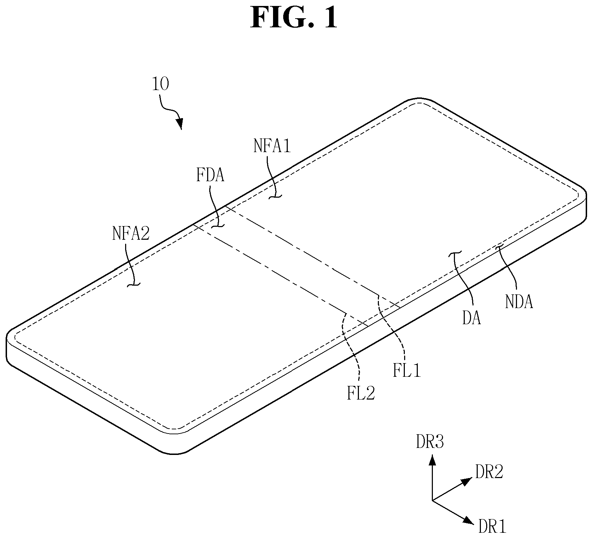

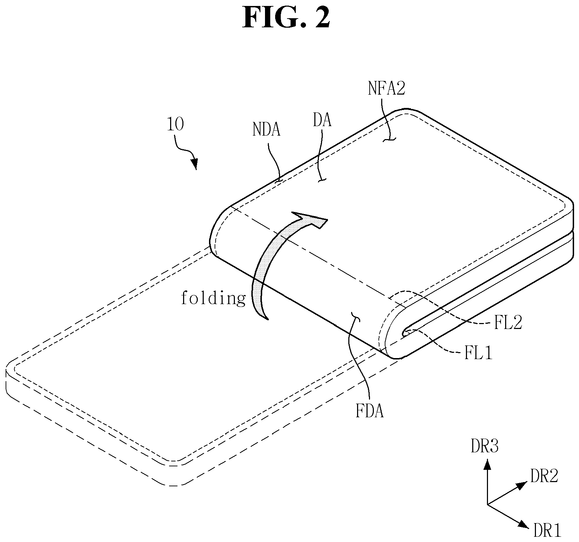

FIG. 1 is a perspective view illustrating a display device in an unfolded state according to some embodiments. FIG. 2 is a perspective view illustrating a display device in a folded state according to some embodiments.

Referring to FIGS. 1 and 2, a display device 10 according to some embodiments may be a foldable display device. It is mainly assumed that the display device 10 is applied to a smartphone, but embodiments according to the present disclosure are not limited thereto. For example, the display device 10 according to embodiments of the present disclosure may be applied to a smartphone, a mobile phone, a tablet PC, a personal digital assistant (PDA), a portable multimedia player (PMP), a television, a game machine, a wristwatch-type electronic device, a head-mounted display, a monitor of a personal computer, a laptop computer, a car navigation system, a car's dashboard, a digital camera, a camcorder, an external billboard, an electronic billboard, a medical device, an inspection device, various household appliances such as a refrigerator and a washing machine, or an Internet-of-Things device.

The display device 10 according to some embodiments may be classified into various types according to a display method. Examples of the display device may include an organic light emitting display (OLED) device, an inorganic light emitting display (inorganic EL) device, a quantum dot light emitting display (QED) device, a micro-LED display device, a nano-LED display device, a field emission display (FED) device, an electrophoretic display (EPD) device, and the like. Hereinafter, the organic light emitting display device will be described as an example of the display device, and the organic light emitting display device applied to the embodiments will be simply referred to as a display device unless special distinction is required. However, the embodiments are not limited to the organic light emitting display device, and other display devices mentioned above or known in the art may be applied.

In the drawings, a first direction DR1 may be a direction parallel to one side of the display device 10 in a plan view (e.g., in a view perpendicular or normal with respect to a display surface of the display device 10) and may be, for example, a horizontal direction of the display device 10. A second direction DR2 may be a direction parallel to the other side in contact with one side of the display device 1 in a plan view and may be, for example, a vertical direction of the display device 10. A third direction DR3 may be a thickness direction of the display device 10.

The display device 10 may have a rectangular or square shape in a plan view. However, embodiments according to the present disclosure are not limited thereto, and in some embodiments, the display device 10 may have a rectangular shape with right-angled or rounded corners in a plan view. The display device 10 may include two short sides arranged in the first direction DR1 and two long sides arranged in the second direction DR2 in a plan view.

The display device 10 includes a display area DA and a non-display area NDA. In a plan view, the shape of the display area DA may correspond to the shape of the display device 10. For example, when the display device 10 has a rectangular shape in a plan view, the display area DA may also have a rectangular shape.

The display area DA may be an area including a plurality of pixels to display an image. The plurality of pixels may be arranged in a matrix. The plurality of pixels may have a rectangular, rhombic, or square shape in a plan view, without being limited thereto. For example, the plurality of pixels may have a quadrilateral shape other than a rectangular, rhombic, or square shape, a polygonal shape other than a quadrilateral shape, a circular shape, or an elliptical shape.

The non-display area NDA may be an area that does not include pixels and does not display an image. The non-display area NDA may be arranged around (e.g., in a periphery or outside a footprint of) the display area DA. The non-display area NDA may be arranged to surround the display area DA as shown in FIGS. 1 and 2, but embodiments according to the present disclosure are not limited thereto. The display area DA may be partially surrounded by the non-display area NDA (e.g., such that the non-display area NDA is in a periphery or outside a footprint of the display area DA).

The display device 10 may maintain both a folded state and an unfolded state. As shown in FIG. 2, the display device 10 may be folded in an in-folding manner in which the display area DA is located on the inside thereof. If the display device 10 is folded in an in-folding manner, portions of the front surface of the display device 10 may face each other. Alternatively, the display device 10 may be folded in an out-folding manner in which the display area DA is located on the outside. When the display device 10 is folded in the out-folding manner, portions of the back surface of the display device 10 may face each other.

The display device 10 may include a folding area FDA, a first non-folding area NFA1, and a second non-folding area NFA2. The folding area FDA may be an area in which the display device 10 is folded or bent, and the first and second non-folding areas NFA1 and NFA2 may be areas in which the display device 10 is not folded or bent.

The first non-folding area NFA1 may be located on one side (e.g., an upper side) of the folding area FDA. The second non-folding area NFA2 may be located on the other side (e.g., a lower side) of the folding area FDA. The folding area FDA, which is defined by a first folding line FL1 and a second folding line FL2, may be a curved area with a curvature (e.g., a set or predetermined curvature). The first folding line FL1 may be the boundary between the folding area FDA and the first non-folding area NFA1, and the second folding line FL2 may be the boundary between the folding area FDA and the second non-folding area NFA2.

As shown in FIGS. 1 and 2, the first folding line FL1 and the second folding line FL2 may extend in the first direction DR1, and in this case, the display device 10 may be folded in the second direction DR2. Accordingly, the length of the display device 10 in the second direction DR2 may be reduced to half (or approximately half), so that a user can conveniently carry the display device 10.

When the first folding line FL1 and the second folding line FL2 extend in the first direction DR1 as shown in FIGS. 1 and 2, the length of the folding area FDA in the second direction DR2 may be shorter than the length of the folding area FDA in the first direction DR1. Further, the length of the first non-folding area NFA1 in the second direction DR2 may be longer than the length of the first non-folding area NFA1 in the first direction DR1. The length of the second non-folding area NFA2 in the second direction DR2 may be longer than the length of the second non-folding area NFA2 in the first direction DR1.

Each of the display area DA and the non-display area NDA may overlap at least one of the folding area FDA, the first non-folding area NFA1, or the second non-folding area NFA2. FIGS. 1 and 2 illustrate that each of the display area DA and the non-display area NDA overlaps the folding area FDA, the first non-folding area NFA1, and the second non-folding area NFA2.

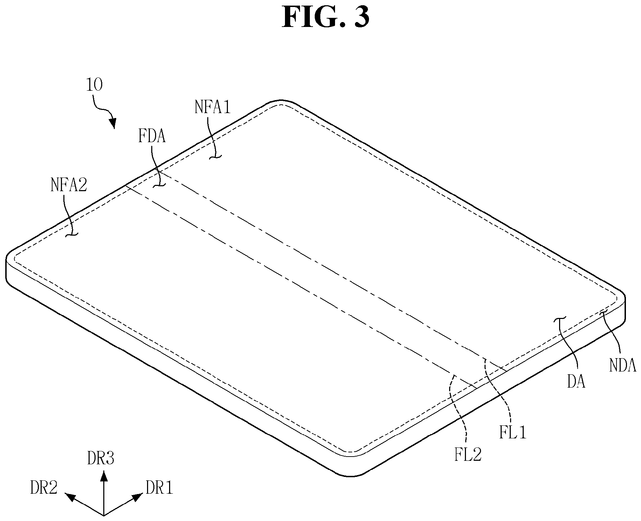

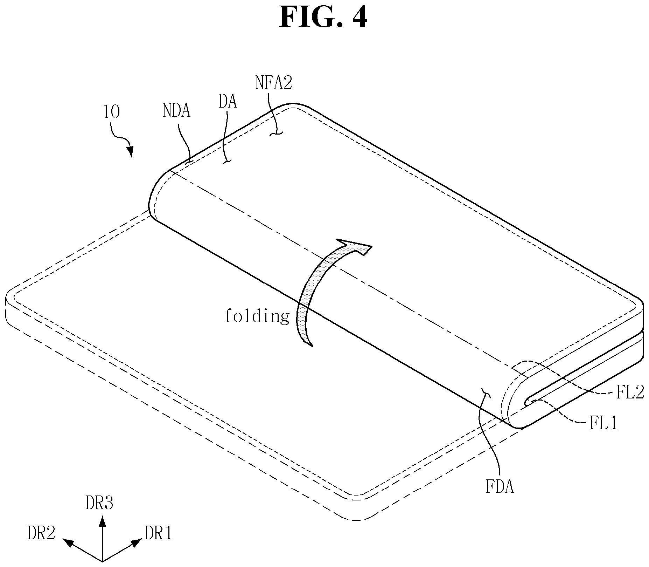

FIG. 3 is a perspective view illustrating a display device in an unfolded state according to some embodiments. FIG. 4 is a perspective view illustrating a display device in a folded state according to some embodiments.

The display device 10 according to the embodiments shown in FIGS. 3 and 4 is different from that of the embodiments of FIGS. 1 and 2 in that the length of the display device 10 in the first direction DR1 is relatively reduced to half (or approximately half) because the first folding line FL1 and the second folding line FL2 extend in the second direction DR2, and the display device 10 is folded in the first direction DR1. Therefore, in FIGS. 3 and 4, some redundant description of the parts already described in the embodiments of FIGS. 1 and 2 may be omitted.

Referring to FIGS. 3 and 4, in a state where the display device 10 is unfolded, the long side of the display device 10 may extend along the second direction DR2, and the short side of the display device 10 may extend along the first direction DR1.

The first folding line FL1 and the second folding line FL2 may extend in the second direction DR2 as shown in FIGS 3 and 4, and in this case, the display device 10 may be folded in the first direction DR1.

A first non-folding area NFA1 may be located on one side, for example, the right side of the folding area FDA. A second non-folding area NFA2 may be located on the other side, for example, the left side of the folding area FDA.

When the first folding line FL1 and the second folding line FL2 extend in the second direction DR2 as shown in FIGS. 3 and 4, the length of the folding area FDA in the first direction DR1 may be shorter than the length of the folding area FDA in the second direction DR2. Further, the length of the first non-folding area NFA1 in the second direction DR2 may be longer than the length of the first non-folding area NFA1 in the first direction DR1. The length of the second non-folding area NFA2 in the second direction DR2 may be longer than the length of the second non-folding area NFA2 in the first direction DR1.

Hereinafter, for simplicity of description, any one of the embodiments of FIGS. 1 and 2 and the embodiments of FIGS. 3 and 4 will be described as an example, but embodiments of the present disclosure are not limited thereto. The following description may be equally applied to both the embodiments of FIGS. 1 and 2 and the embodiments of FIGS. 3 and 4.

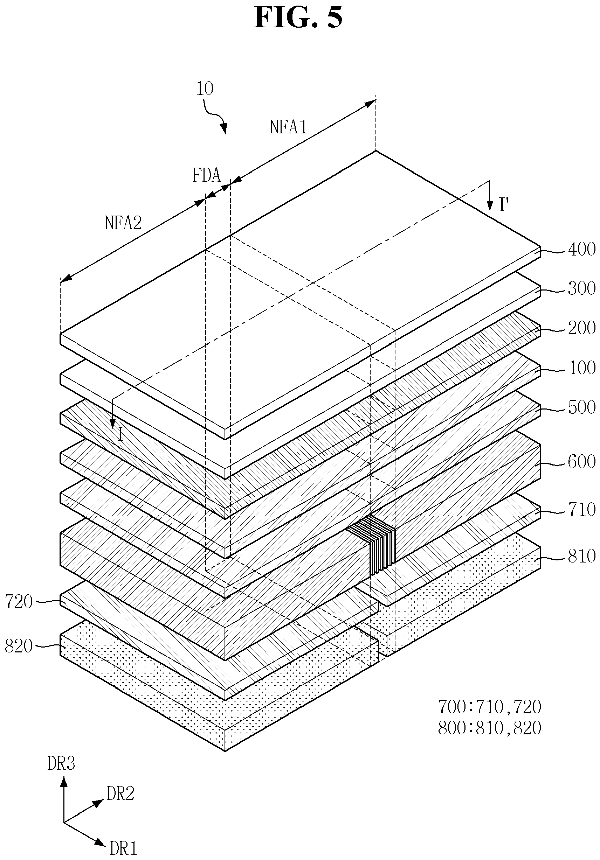

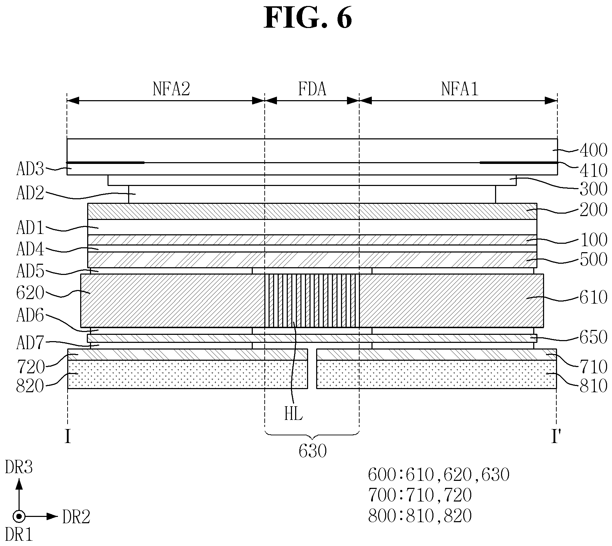

FIG. 5 is an exploded perspective view showing an example of a display device according to some embodiments. FIG. 6 is a cross-sectional view taken along the line I-I' of FIG. 5.

Referring to FIGS. 5 and 6, the display device 10 according to some embodiments may include a display panel 100, a polarizing film 200, a window 300, a protective film 400, a panel lower member 500, a digitizer 600, a shielding member 700, and a heat dissipation member 800.

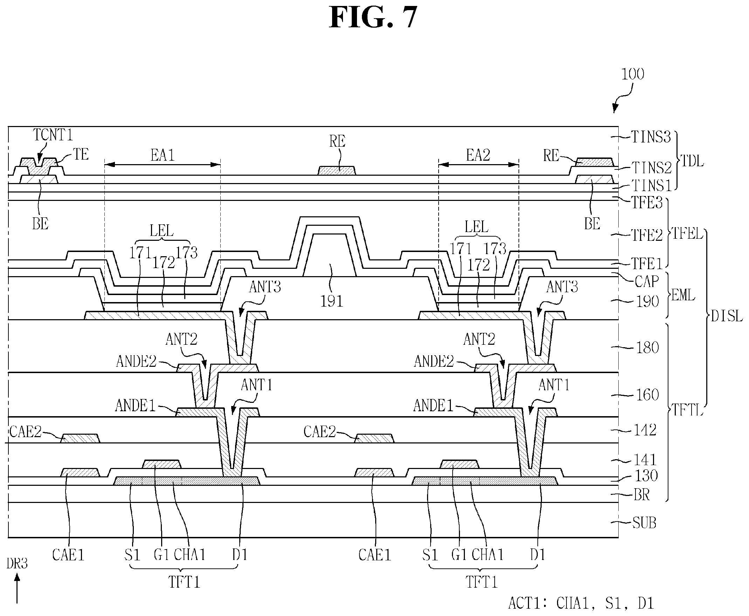

The display panel 100 will be described in detail later with reference to FIG. 7.

The polarizing film 200 may be located on the front surface of the display panel 100. The front surface of the display panel 100 may be a display surface on which an image is displayed. The polarizing film 200 may be adhered to the front surface of the display panel 100 by a first adhesive member AD1. The first adhesive member AD1 may be an optically clear adhesive (OCA) film or an optically clear resin (OCR). The polarizing film 200 may include a phase retardation film such as a linear polarizer plate and a quarter-wave (λ/4) plate.

The window 300 may be located on the front surface of the polarizing film 200. The window 300 may be adhered to the front surface of the polarizing film 200 by a second adhesive member AD2. The second adhesive member AD2 may be an optically clear adhesive film or an optically clear resin. The window 300 may be made of a transparent material and may contain, e.g., glass or plastic. For example, the window 300 may be, but not necessarily, an ultra thin glass (UTG) with a thickness of 0.1 millimeters (mm) or less or a transparent polyimide film.

The protective film 400 may be located on the front surface of the window 300. The protective film 400 may be adhered to the front surface of the window 300 by a third adhesive member AD3. The third adhesive member AD3 may be an optically clear adhesive film or an optically clear resin. The protective film 400 may perform at least one of functions of prevention or reduction of scattering, impact absorption, prevention or reduction of scratches, prevention or reduction of fingerprint smudges, and prevention or reduction of glare on the window 300.

A light blocking layer 410 may be located on the back surface of the protective film 400. The light blocking layer 410 may be located on the edge of the protective film 400. The light blocking layer 410 may include a light blocking material capable of blocking light. For example, the light blocking layer 410 may contain an organic block pigment or an inorganic black pigment such as carbon black or the like.

The panel lower member 500 may be located on the back surface of the display panel 100. The panel lower member 500 may be adhered to the back surface of the display panel 100 by a fourth adhesive member AD4. The fourth adhesive member AD4 may be a pressure sensitive adhesive (PSA).

The panel lower member 500 may be a buffer layer for absorbing shock from the outside. The panel lower member 500 absorbs external shock to prevent or reduce damage to the display panel 100. The panel lower member 500 may be formed of a single layer or multiple layers. For example, the buffer layer may include an elastic material such as a rubber, a urethane-based material, a sponge in which an acrylic-based material is foam-molded, or the like.

Although it is illustrated in FIGS. 5 and 6 that the panel lower member 500 is also located in the folding area FDA, embodiments according to the present disclosure are not limited thereto. For example, the panel lower member 500 may be removed from the folding area FDA so that the display device 10 is smoothly folded.

The digitizer 600 may be located on the back surface of the panel lower member 500, and may include a first non-folding portion 610, a second non-folding portion 620, and a folding portion 630.

The first non-folding portion 610 may overlap at least a part of the first non-folding area NFA1. The second non-folding portion 620 may overlap at least a part of the second non-folding area NFA2. The folding portion 630 may overlap the folding area FDA. Accordingly, the folding portion 630 may be located between the first non-folding portion 610 and the second non-folding portion 620.

The width in the first direction DR1 of the folding portion 630 of the digitizer 600 according to some embodiments may be 5 millimeters (mm) or more and 20 mm or less. However, the width of the folding portion 630 of the digitizer 600 is not limited to the above numerical range.

Further, the thickness in the third direction DR3 of the digitizer 600 according to some embodiments may be 30 micrometers (µm) or more and 300 µm or less. However, the thickness of the digitizer 600 is not limited to the above numerical range.

In the case where the width of the folding portion 630 of the digitizer 600 and the thickness of the digitizer 600 have the above numerical ranges, the digitizer 600 may be located on the back surface of the display panel 100 to sufficiently support the display panel 100, and the shape may be easily changed by ensuring the flexibility of the folding portion 630 of the digitizer 600 that is arranged to correspond to the folding area FDA of the display device 10 during the folding operation of the display device 10.

The digitizer 600 may include a plurality of holes HL located in the folding area FDA to be easily bent in the folding area FDA. That is, the folding portion 630 of the digitizer 600 may include the holes HL defined to penetrate in the third direction DR3. The holes HL may correspond to the folding area FDA, and may be arranged to be spaced apart from each other along the first direction DR1 and the second direction DR2.

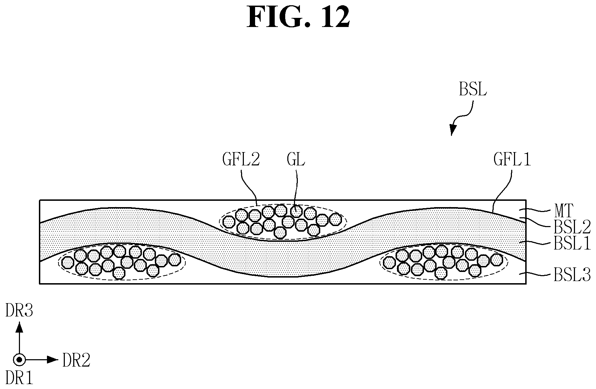

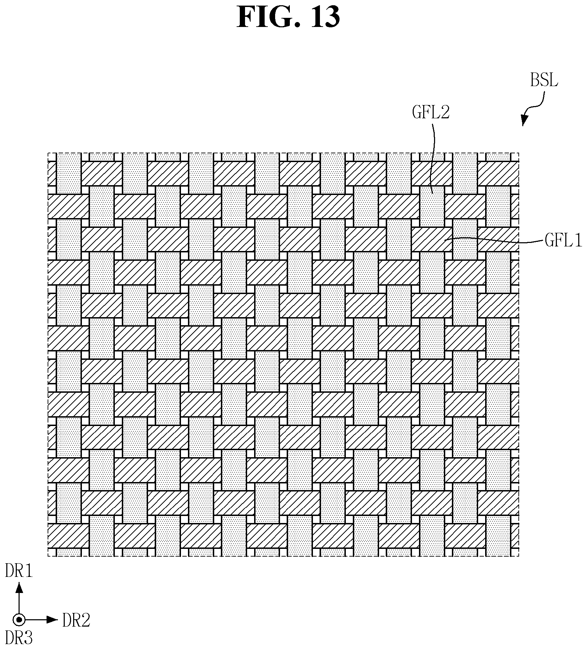

The digitizer 600 may have a structure in which a plurality of prepregs are stacked. For example, the digitizer 600 may have a structure in which first prepregs parallel to the folding lines FL1 and FL2 and second prepregs perpendicular to the folding lines FL1 and FL2 are alternately stacked. The first prepregs and the second prepregs may be stacked by hot press or auto clave. A detailed description thereof will be given later with reference to FIGS. 12 and 13. The term "prepreg" refers to a reinforcing material (or reinforcing fabric) that has been pre-impregnated with resin.

In the digitizer 600 according to some embodiments, a base layer where sensing coils will be located may include a reinforcing fiber composite material. The digitizer 600 may include a reinforcing fiber arranged in a matrix portion. The reinforcing fiber may be a carbon fiber or a glass fiber.

For example, the reinforcing fiber may be epoxy, polyester, polyamide, polycarbonate, polypropylene, polybutylene, or vinyl ester.

The matrix portion may include a polymer resin. The matrix portion may include a thermoplastic resin. The sensing coils may include sensing coils located on the front surface and the back surface of the base layer and insulated from each other. The components of the digitizer 600 will be described in detail later.

The digitizer 600 may include electrode patterns for detecting access or contact of an electronic pen such as a stylus pen that supports electromagnetic resonance (EMR). That is, the digitizer 600 may detect the magnetic field or the electromagnetic signal emitted from the electronic pen based on the electrode patterns, and determine the point where the detected magnetic field or the electromagnetic signal is strongest as touch coordinates.

The digitizer 600 may be attached to the back surface of the panel lower member 500 by fifth adhesive members AD5. The fifth adhesive members AD5 may not be located in the folding area FDA to relatively reduce the folding stress of the display device 10. One of the fifth adhesive members AD5 may be located in the first non-folding area NFA1, and another one may be located in the second non-folding area NFA2. According to some embodiments, the fifth adhesive members AD5 may be a pressure sensitive adhesive. However, embodiments according to the present disclosure are not limited thereto.

A buffer member 650 may be located on the back surface of the digitizer 600. The buffer member 650 may be attached to the back surface of the digitizer 600 by sixth adhesive members AD6. The sixth adhesive members AD6 may not be located in the folding area FDA to relatively reduce the folding stress of the display device 10. That is, one of the sixth adhesive members AD6 may be located in the first non-folding area NFA1, and another one may be located in the second non-folding area NFA2. The sixth adhesive members AD6 may be a pressure sensitive adhesive.

The buffer member 650 absorbs external shock to prevent or reduce damage to the digitizer 600. The buffer member 650 may include an elastic material such as a rubber, a urethane-based material, a sponge in which an acrylic-based material is foam-molded, or the like.

The shielding member 700 may include a first shielding member 710 and a second shielding member 720. The first shielding member 710 and the second shielding member 720 may be located on the back surface of the buffer member 650. The first shielding member 710 and the second shielding member 720 may be attached to the back surface of the buffer member 650 by seventh adhesive members AD7. The seventh adhesive members AD7 may be a pressure sensitive adhesive.

According to some embodiments, the first shielding member 710, the second shielding member 720, and the seventh adhesive members AD7 may not be located in the folding area FDA to relatively reduce the folding stress of the display device 10. The first shielding member 710 may be located in the first non-folding area NFA1, and the second shielding member 720 may be located in the second non-folding area NFA2. The gap between the first shielding member 710 and the second shielding member 720 may overlap the folding area FDA, and may be smaller than the width of the folding area FDA. However, embodiments according to the present disclosure are not limited thereto.

The first shielding member 710 and the second shielding member 720 include magnetic metal powder, thereby allowing an electromagnetic signal or magnetic field that has passed through the digitizer 600 to flow through the first shielding member 710 and the second shielding member 720. Therefore, the first shielding member 710 and the second shielding member 720 may relatively reduce emission of the magnetic field or the electromagnetic signal to the back surfaces of the first shielding member 710 and the second shielding member 720.

The heat dissipation member 800 may include a first heat dissipation member 810 and a second heat dissipation member 820. The first heat dissipation member 810 and the second heat dissipation member 820 may be located on the back surface of the shielding member 700.

According to some embodiments, the first heat dissipation member 810 and the second heat dissipation member 820 may not be located in the folding area FDA to relatively reduce the folding stress of the display device 10. That is, the first heat dissipation member 810 may be located in the first non-folding area NFA1, and the second heat dissipation member 820 may be located in the second non-folding area NFA2. The gap between the first heat dissipation member 810 and the second heat dissipation member 820 may overlap the folding area FDA, and may be smaller than the width of the folding area FDA.

The first heat dissipation member 810 and the second heat dissipation member 820 may be a metal film having excellent thermal conductivity, such as copper, nickel, ferrite, or silver. Accordingly, the heat generated in the display device 10 may be emitted to the outside by the first heat dissipation member 810 and the second heat dissipation member 820.

FIG. 7 is a cross-sectional view illustrating an example of a display panel according to some embodiments.

Referring to FIG. 7, the display panel 100 may include a substrate SUB, a display layer DISL, and a touch sensing layer TDL. The display layer DISL may include the thin film transistor layer TFTL, the light emitting element layer EML, and the encapsulation layer TFEL.

The substrate SUB may be formed of an insulating material such as polymer resin. For example, the substrate SUB may be formed of polyimide. The substrate SUB may be a flexible substrate which can be bent, folded or rolled.

The thin film transistor layer TFTL may be located on the substrate SUB. The thin film transistor layer TFTL may include a barrier film BR, a thin film transistor TFT1, a first capacitor electrode CAE1, a second capacitor electrode CAE2, a first anode connection electrode ANDE1, a second anode connection electrode ANDE2, a gate insulating film 130, a first interlayer insulating film 141, a second interlayer insulating film 142, a first planarization film 160, and a second planarization film 180.

The barrier film BR may be located on the substrate SUB. The barrier film BR is a film for protecting thin film transistors of the thin film transistor layer TFTL and a light emitting layer 172 of the light emitting element layer EML from moisture permeating through the substrate SUB which is susceptible to moisture permeation. The barrier film BR may be formed as a plurality of inorganic films that are alternately stacked. For example, the barrier film BR may be formed of multiple films in which one or more inorganic films of a silicon nitride layer, a silicon oxynitride layer, a silicon oxide layer, a titanium oxide layer and an aluminum oxide layer are alternately stacked.

The thin film transistor TFT1 may be located on the barrier film BR. The active layer ACT1 of the thin film transistor TFT1 may be located on the barrier film BR. The active layer ACT1 of the thin film transistor TFT1 may include polycrystalline silicon, monocrystalline silicon, low-temperature polycrystalline silicon, amorphous silicon, or an oxide semiconductor.

The active layer ACT1 may include a channel region CHA1, a source region S1, and a drain region D1. The channel region CHA1 may be a region overlapping a gate electrode G1 in the third direction DR3 that is the thickness direction of the substrate SUB. The source region S1 may be located on one side of the channel region CHA1, and the drain region D1 may be located on the other side of the channel region CHA1. The source region S1 and the drain region D1 may be regions that do not overlap the gate electrode G1 in the third direction DR3. The source region S1 and the drain region D1 may be regions having conductivity by doping a silicon semiconductor or an oxide semiconductor with ions or impurities.

The gate insulating film 130 may be located on the active layer ACT1 of the thin film transistor TFT1. The gate insulating film 130 may be formed of an inorganic film, for example, a silicon nitride layer, a silicon oxynitride layer, a silicon oxide layer, a titanium oxide layer, or an aluminum oxide layer.

The gate electrode G1 of the thin film transistor TFT1 and a first capacitor electrode CAE1 may be located on the gate insulating film 130. The gate electrode G1 may overlap the active layer ACT1 in the third direction DR3. FIG. 7 illustrates that the gate electrode G1 and the first capacitor electrode CAE1 are spaced apart from each other, but the gate electrode G1 and the first capacitor electrode CAE1 may be connected to each other and formed integrally. The gate electrode G1 and the first capacitor electrode CAE1 may be formed as a single layer or multiple layers made of any one of molybdenum (Mo), aluminum (Al), chromium (Cr), gold (Au), titanium (Ti), nickel (Ni), neodymium (Nd) and copper (Cu) or an alloy thereof.

The first interlayer insulating film 141 may be located on the gate electrode G1 and the first capacitor electrode CAE1 of the thin film transistor TFT1. The first interlayer insulating film 141 may be formed of an inorganic film, for example, a silicon nitride layer, a silicon oxynitride layer, a silicon oxide layer, a titanium oxide layer, or an aluminum oxide layer. The first interlayer insulating film 141 may be formed of a plurality of inorganic films.

The second capacitor electrode CAE2 may be located on the first interlayer insulating film 141. The second capacitor electrode CAE2 may overlap the first capacitor electrode CAE1 of the thin film transistor TFT1 in the third direction DR3. Further, when the gate electrode G1 and the first capacitor electrode CAE1 are formed integrally, the second capacitor electrode CAE2 may overlap the gate electrode G1 in the third direction DR3. Because the first interlayer insulating film 141 has a dielectric constant (e.g., a set or predetermined dielectric constant), a capacitor may be formed by the first capacitor electrode CAE1, the second capacitor electrode CAE2, and the first interlayer insulating film 141 located therebetween. The second capacitor electrode CAE2 may be formed of a single layer or multiple layers made of any one of molybdenum (Mo), aluminum (Al), chromium (Cr), gold (Au), titanium (Ti), nickel (Ni), neodymium (Nd) and copper (Cu), or an alloy thereof.

The second interlayer insulating film 142 may be located on the second capacitor electrode CAE2. The second interlayer insulating film 142 may be formed of an inorganic film, for example, a silicon nitride layer, a silicon oxynitride layer, a silicon oxide layer, a titanium oxide layer, or an aluminum oxide layer. The second interlayer insulating film 142 may be formed of a plurality of inorganic films.

The first anode connection electrode ANDE1 may be located on the second interlayer insulating film 142. The first anode connection electrode ANDE1 may be connected to the drain region D1 of the thin film transistor TFT1 through a first connection contact hole ANT1 penetrating the gate insulating film 130, the first interlayer insulating film 141, and the second interlayer insulating film 142. The first anode connection electrode ANDE1 may be formed as a single layer or multiple layers made of any one of molybdenum (Mo), aluminum (Al), chromium (Cr), gold (Au), titanium (Ti), nickel (Ni), neodymium (Nd) and copper (Cu), or an alloy thereof.

The first planarization film 160 for flattening a stepped portion formed by the thin film transistor TFT1 may be located on the first anode connection electrode ANDE1. The first planarization film 160 may be formed of an organic film such as acryl resin, epoxy resin, phenolic resin, polyamide resin, polyimide resin and the like.

The second anode connection electrode ANDE2 may be located on the first planarization film 160. The second anode connection electrode ANDE2 may be connected to the first anode connection electrode ANDE1 through a second connection contact hole ANT2 penetrating the first planarization film 160. The second anode connection electrode ANDE2 may be formed as a single layer or multiple layers made of any one of molybdenum (Mo), aluminum (Al), chromium (Cr), gold (Au), titanium (Ti), nickel (Ni), neodymium (Nd) and copper (Cu), or an alloy thereof.

The second planarization film 180 may be located on the second anode connection electrode ANDE2. The second planarization film 180 may be formed of an organic film such as acryl resin, epoxy resin, phenolic resin, polyamide resin, polyimide resin and the like.

The light emitting element layer EML including light emitting elements LEL and a bank 190 may be located on the second planarization film 180. Each of the light emitting elements LEL includes a pixel electrode 171, the light emitting layer 172, and a common electrode 173.

The pixel electrode 171 may be located on the second planarization film 180. The pixel electrode 171 may be connected to a second anode connection electrode ANDE2 through a third connection contact hole ANT3 penetrating the second planarization film 180.

In a top emission structure that emits light toward the common electrode 173 with respect to the light emitting layer 172, the pixel electrode 171 may be made of a metal material having high reflectivity such as a stacked structure (Ti/Al/Ti) of aluminum (Al) and titanium (Ti), a stacked structure (ITO/AI/ITO) of aluminum (Al) and indium tin oxide (ITO), a stacked structure (ITO/Ag/ITO) of silver (Ag) and ITO, an APC alloy, and a stacked structure (ITO/APC/ITO) of an APC alloy and ITO. The APC alloy is an alloy of silver (Ag), palladium (Pd) and copper (Cu).

The bank 190 may be formed to partition the pixel electrode 171 on the second planarization film 180, in order to define a first emission portion EA1 and a second emission portion EA2. The bank 190 may be arranged to cover the edge of the pixel electrode 171. The bank 190 may be formed of an organic film such as acryl resin, epoxy resin, phenolic resin, polyamide resin, polyimide resin and the like.

Each of the first emission portion EA1 and the second emission portion EA2 represents an area in which the pixel electrode 171, the light emitting layer 172, and the common electrode 173 are sequentially stacked, and holes from the pixel electrode 171 and electrons from the common electrode 173 are recombined in the light emitting layer 172 to emit light.

The light emitting layer 172 may be located on the pixel electrode 171 and the bank 190. The light emitting layer 172 may include an organic material to emit light in a color (e.g., a set or predetermined color). For example, the light emitting layer 172 includes a hole transporting layer, an organic material layer, and an electron transporting layer.

The common electrode 173 may be located on the light emitting layer 172. The common electrode 173 may be arranged to cover the light emitting layer 172. The common electrode 173 may be a common layer formed commonly in the first emission portion EA1 and the second emission portion EA2. A capping layer may be formed on the common electrode 173.

In the top emission structure, the common electrode 173 may be formed of a transparent conductive material (TCO) such as ITO or IZO capable of transmitting light or a semi-transmissive conductive material such as magnesium (Mg), silver (Ag), or an alloy of magnesium (Mg) and silver (Ag). When the common electrode 173 is formed of a semi-transmissive conductive material, the light emission efficiency can be increased due to a micro-cavity effect.

A spacer 191 may be located on the bank 190. The spacer 191 may serve to support a mask during the fabricating process of fabricating the light emitting layer 172. The spacer 191 may be formed of an organic film such as acryl resin, epoxy resin, phenolic resin, polyamide resin, polyimide resin and the like.

A capping layer CAP may be located on the common electrode 173. The capping layer CAP may prevent or reduce instances of contaminants or impurities such as moisture or air permeating from the outside to damage or contaminate the light emitting layer 172.

The encapsulation layer TFEL may be located on the capping layer CAP. The encapsulation layer TFEL includes at least one inorganic film to prevent or reduce contaminants such as oxygen or moisture permeating into the light emitting element layer EML. In addition, the encapsulation layer TFEL includes at least one organic film to protect the light emitting element layer EML from foreign substances such as dust. For example, the encapsulation layer TFEL includes a first encapsulation inorganic film TFE1, an encapsulation organic film TFE2, and a second encapsulation inorganic film TFE3.

The first encapsulation inorganic film TFE1 may be located on the common electrode 173, the encapsulation organic film TFE2 may be located on the first encapsulation inorganic film TFE1, and the second encapsulation inorganic film TFE3 may be located on the encapsulation organic film TFE2. The first encapsulation inorganic film TFE1 and the second encapsulation inorganic film TFE3 may be formed of multiple films in which one or more inorganic films of a silicon nitride layer, a silicon oxynitride layer, a silicon oxide layer, a titanium oxide layer and an aluminum oxide layer are alternately stacked. The encapsulation organic film TFE2 may be an organic film such as acryl resin, epoxy resin, phenolic resin, polyamide resin, polyimide resin or the like.

The touch sensing layer TDL may be located on the encapsulation layer TFEL. The touch sensing layer TDL includes a first touch insulating film TINS1, the connection electrode BE, a second touch insulating film TINS2, the driving electrode TE, the sensing electrode RE, and a third touch insulating film TINS3.

The first touch insulating film TINS1 may be located on the encapsulation layer TFEL. The first touch insulating film TINS1 may be formed of an inorganic film, for example, a silicon nitride layer, a silicon oxynitride layer, a silicon oxide layer, a titanium oxide layer, or an aluminum oxide layer.

The connection electrode BE may be located on the first touch insulating film TINS1. The connection electrode BE may be formed as a single layer or multiple layers made of any one of molybdenum (Mo), aluminum (Al), chromium (Cr), gold (Au), titanium (Ti), nickel (Ni), neodymium (Nd) and copper (Cu), or an alloy thereof.

The second touch insulating film TINS2 may be located on the connection electrode BE. The second touch insulating film TINS2 may be formed of an inorganic film, for example, a silicon nitride layer, a silicon oxynitride layer, a silicon oxide layer, a titanium oxide layer, or an aluminum oxide layer. Alternatively, the second touch insulating film TINS2 may be formed of an organic film such as acryl resin, epoxy resin, phenolic resin, polyamide resin, polyimide resin and the like.

The driving electrodes TE and the sensing electrodes RE may be located on the second touch insulating film TINS2. The driving electrodes TE and the sensing electrodes RE may be formed as a single layer or multiple layers made of any one of molybdenum (Mo), aluminum (Al), chromium (Cr), gold (Au), titanium (Ti), nickel (Ni), neodymium (Nd) and copper (Cu), or an alloy thereof.

The driving electrode TE and the sensing electrode RE may overlap the connection electrode BE in the third direction DR3. The driving electrode TE may be connected to the connection electrode BE through a touch contact hole TCNT1 penetrating the first touch insulating film TINS1.

The third touch insulating film TINS3 may be formed on the driving electrodes TE and the sensing electrodes RE. The third touch insulating film TINS3 may serve to flatten the stepped portion formed by the driving electrodes TE, the sensing electrodes RE, and the connection electrodes BE. The third touch insulating film TINS3 may be formed of an organic film such as acryl resin, epoxy resin, phenolic resin, polyamide resin, polyimide resin and the like.

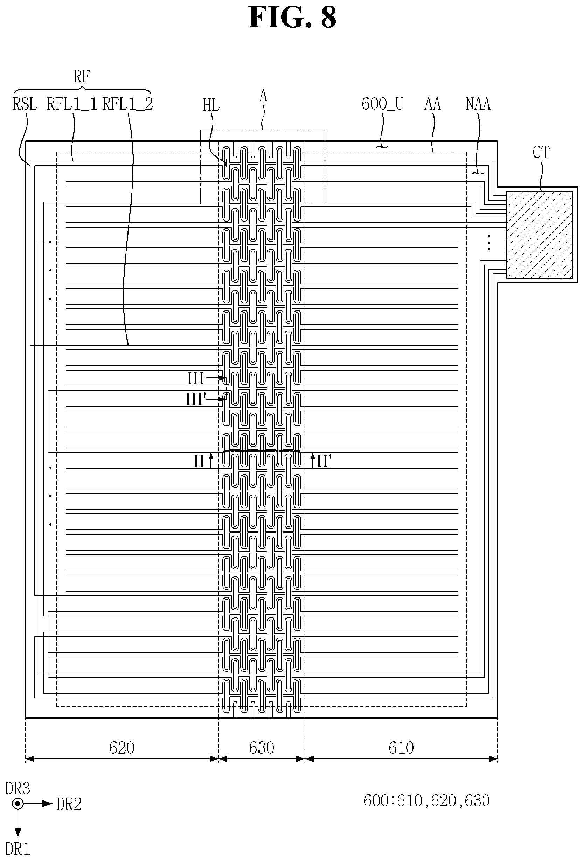

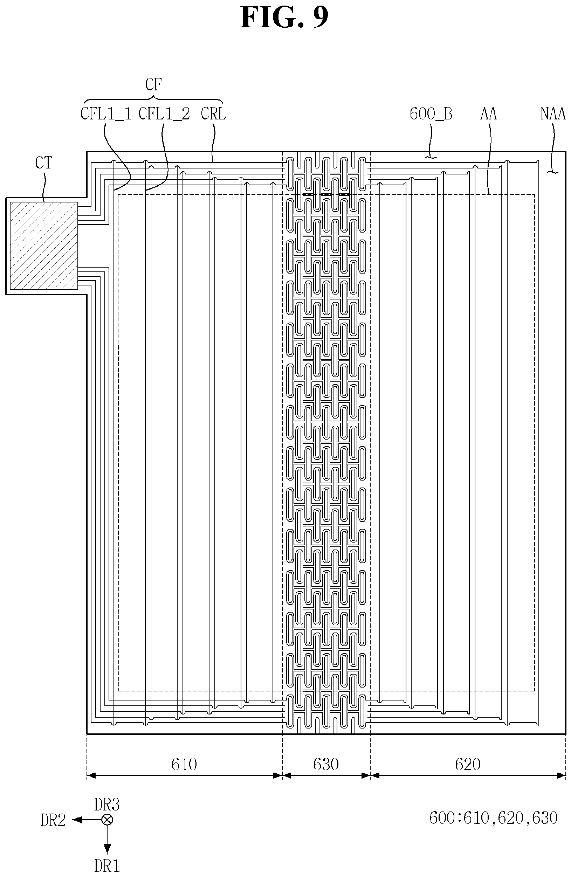

FIG. 8 is a plan view showing a front surface of a digitizer according to some embodiments. FIG. 9 is a rear view showing a back surface of a digitizer according to some embodiments.

Referring to FIGS. 8 and 9, FIG. 8 illustrates sensing coils located on a front surface 600_U of the digitizer 600 according to some embodiments, and FIG. 9 illustrates sensing coils located on a back surface 600_B of the digitizer 600.

The digitizer 600 may include an active area AA and a peripheral area NAA. The digitizer 600 may include a plurality of sensing coils RF and CF and a connector CT.

The active area AA of the digitizer 600 may overlap the display area DA (see FIG. 1) of the display device 10, and the peripheral area NAA thereof may overlap the non-display area NDA (see FIG. 1) of the display device 10. However, embodiments according to the present disclosure are not limited thereto, and the active area AA may overlap the non-display area NDA (see FIG. 1), and the peripheral area NAA may overlap the display area DA (see FIG. 1).

The active area AA may be defined as an area where an input of a pen is sensed, and the peripheral area NAA may be an area where connection lines for allowing each of the sensing coils RF and CF to form a loop are located. In the peripheral area NAA, the connection lines for allowing each of the sensing coils RF and CF to form a loop may be densely arranged.

Each of first sensing coils RF may include first long sides RFL1_1 and second long sides RFL1_2 extending in the second direction DR2 and short sides RSL extending in the first direction DR1, connecting one ends of the first long sides RFL1_1 to one ends of the second long sides RFL1_2, and spaced apart from each other in the second direction DR2.

The loop formed by the first sensing coils RF may have a shape extending in the second direction DR2, for example, in the horizontal direction. The loop formed by the first sensing coils RF may be referred to as a horizontal loop.

In the drawing, the case where the loops formed by the first sensing coils RF include a plurality of loops having different lengths in the first direction DR1 is illustrated as an example, but embodiments according to the present disclosure are not limited thereto. For example, the lengths of the short sides RSL in the first direction DR1 according to some embodiments may be different. The widths in the first direction DR1 between the first long sides RFL1_1 and the second long sides RFL1_2 included in the respective first sensing coils RF may be different. However, embodiments according to the present disclosure are not limited thereto, and the lengths of the short sides RSL in the first direction DR1 may be the same.

The arrangement of the loops formed by the first sensing coils RF shown in the drawing is only an example, and is not limited thereto. The first sensing coils RF forming one loop may be spaced apart from each other, but embodiments according to the present disclosure are not limited thereto, and the respective loops may at least partially overlap each other in the third direction DR3.

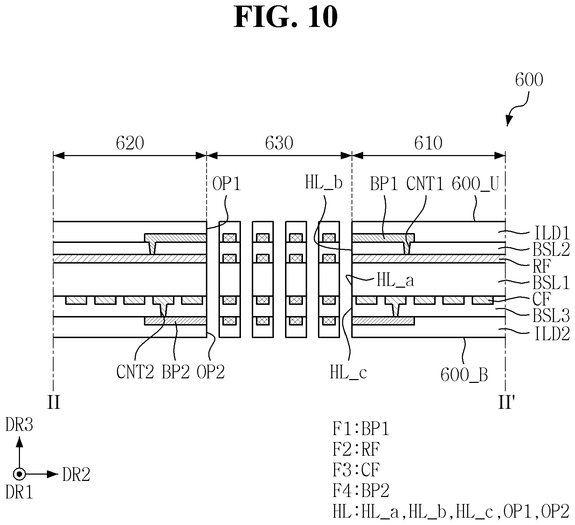

In the first long sides RFL1_1 and the second long sides RFL1_2 included in the respective first sensing coils RF, portions crossing the folding portion 630 of the digitizer 600 may extend from the first non-folding portion 610 to the second non-folding portion 620 via the holes HL. A detailed description thereof will be given later with reference to FIG. 10.

One ends of the first sensing coils RF extended to the peripheral area NAA may be connected to the connector CT.

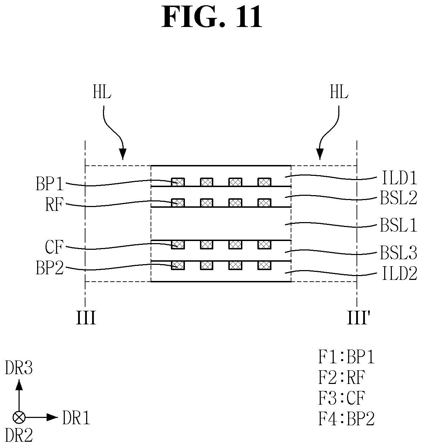

The first long sides RFL1_1, the second long sides RFL1_2, and the short sides RSL included in the respective first sensing coils RF according to some embodiments may be located in different layers. For example, the first long sides RFL1_1, the second long sides RFL1_2, and the short sides RSL may include bridge lines BP1 and BP2 (see FIG. 10) and be distributed and arranged in a plurality of layers as shown in FIGS. 10 and 11.

Each of second sensing coils CF may include third long sides CFL1_1 and fourth long sides CFL1_2 extending in the first direction DR1 and routing lines CRL extending in the second direction DR2, connecting one ends of the third long sides CFL1_1 to one ends of the fourth long sides CFL1_2, and spaced apart from each other in the first direction DR1.

The loop formed by the second sensing coils CF may have a shape extending in the first direction DR1, for example, in the vertical direction. The loop formed by the second sensing coils CF may be referred to as a vertical loop.

In the drawing, the case where the loops formed by the second sensing coils CF include a plurality of loops having different lengths in the second direction DR2 is illustrated an example, but embodiments according to the present disclosure are not limited thereto. For example, the length in the second direction DR2 of the routing line CRL constituting the short sides of the loops formed by the second sensing coils CF may be different for the respective loops. The short sides of the loops formed by the second sensing coils CF refer to portions except a portion where the routing line CRL extends from the loop to be connected to the connector CT. The short sides of the loops formed by the second sensing coils CF refer to a portion of the routing line CRL located between the third long sides CFL1_1 and the fourth long sides CFL1_2. However, embodiments according to the present disclosure are not limited thereto, and the length CF in the second direction DR2 of the routing line CRL constituting the short sides of the loops formed by the second sensing coils CF may be the same.

The arrangement of the loops formed by the second sensing coils CF shown in the drawing is only an example, and is not limited thereto. The second sensing coils CF forming one loop may be spaced apart from each other, but embodiments according to the present disclosure are not limited thereto, and the respective loops may at least partially overlap each other in the third direction DR3.

According to some embodiments, in the third long sides CFL1_1 and the fourth long sides CFL1_2 included in the respective second sensing coils CF, the lines located at the folding portion 630 of the digitizer 600 may be located between groups of the holes HL arranged in the first direction DR1 and spaced apart from each other along the second direction DR2.

In the routing line CRL, the line located at the folding portion 630 may be connected to one end of the corresponding third long sides CFL1_1 and one end of the corresponding fourth long sides CFL1_2 via the holes HL.

One end of the second sensing coils CF extending to the peripheral area NAA may be connected to the connector CT, similarly to the first sensing coils RF.

The third long sides CFL1_1 and the fourth long sides CFL1_2 and the routing lines CRL included in the respective second sensing coils CF according to some embodiments may be located on different layers. For example, the third long sides CFL1_1 and the fourth long sides CFL1_2 and the routing lines CRL may include the bridge lines BP1 and BP2 (see FIG. 10) and be distributed and located in a plurality of layers as shown in FIGS. 10 and 11.

According to some embodiments, the second sensing coils CF may be referred to as driving coils, and the first sensing coils RF may be referred to as sensing coils, but embodiments according to the present disclosure are not limited thereto and they may be referred to as vice versa. According to some embodiments, the first sensing coil RF and the second sensing coil CF may be partially included in the driving coil and the sensing coil.

When a current flows through the driving coils, magnetic force lines may be induced between the driving coils and the sensing coils. The sensing coils may sense the induced electromagnetic force emitted from an electromagnetic pen and output it as a sensing signal to one terminals of the sensing coils. One terminals of the sensing coils may be connected to signal lines located in the peripheral area NAA.

FIG. 10 is a cross-sectional view taken along the line II-II' of FIG. 8. FIG. 11 is a cross-sectional view taken along the line III-III' of FIG. 8.

Referring to FIGS. 10 and 11 in addition to FIGS. 8 and 9, the digitizer 600 according to some embodiments may include a first base layer BSL1, the first sensing coils RF located on one surface of the first base layer BSL1, the second sensing coils CF located on the other surface of the first base layer BSL1, a second base layer BSL2 located on the first sensing coils RF, a third base layer BSL3 located on the second sensing coils CF, first bridge lines BP1 located on the second base layer BSL2, second bridge lines BP2 located on the third base layer BSL3, a first insulating layer ILD1 located on the first bridge lines BP1, and a second insulating layer ILD2 located on the second bridge lines BP2.

The holes HL included in the folding portion 630 of the digitizer 600 may be formed while penetrating from the front surface 600_U of the digitizer 600 toward the back surface 600_B thereof. For example, the holes HL included in the folding portion 630 of the digitizer 600 may include first to third base holes HL_a, HL_b, and HL_c respectively penetrating the first to third base layers BSL1, BSL2, and BSL3, and first and second insulating holes OP1 and OP2 respectively penetrating the first and second insulating layers ILD1 and ILD2. The inner surfaces of the first and second insulating holes OP1 and OP2 and the first to third base holes HL_a, HL_b, and HL_c may be aligned with each other.

The first sensing coil RF may be located on the front surface of the first base layer BSL1, and the second sensing coil CF may be located on the back surface of the first base layer BSL1. The first sensing coil RF and the second sensing coil CF may overlap in the third direction DR3, which is the thickness direction, with the first base layer BSL1 interposed therebetween. The second base layer BSL2 may be located on the first sensing coil RF, and the third base layer BSL3 may be located on the second sensing coil CF.

The first to third base layers BSL1, BSL2, and BSL3 will be described in conjunction with FIGS. 12 and 13.

According to some embodiments, the first sensing coils RF located at the first non-folding portion 610 and the second non-folding portion 620 may extend along the second direction DR2 in a line shape in cross-sectional view, and the first sensing coils RF located at the folding portion 630 may be arranged to be spaced apart from each other along the second direction DR2 in an island shape in cross-sectional view. The second sensing coils CF located at the first non-folding portion 610, the second non-folding portion 620, and the folding portion 630 may be arranged to be spaced apart from each other along the second direction DR2 in an island shape in cross-sectional view.

However, embodiments according to the present disclosure are not limited thereto, and the cross-sectional shape may vary depending on the horizontal loop arrangement and the vertical loop arrangement of the first sensing coils RF and the second sensing coils CF.

The first bridge line BP1 may be located on the second base layer BSL2, and the second bridge line BP2 may be located on the third base layer BSL3. The first bridge line BP1 may be connected to the first sensing coils RF through a first bridge contact hole CNT1 included in the second base layer BSL2. The second bridge line BP2 may be connected to the second sensing coils CF through a second bridge contact hole CNT2 included in the third base layer BSL3.

The first bridge line BP1 and the second bridge line BP2 may be located in a line shape while extending in the first non-folding area NFA1 and the second non-folding area NFA2, respectively, along the second direction DR2 in cross-sectional view, and may be arranged in an island shape while being spaced apart from each other in the folding area FDA along the second direction DR2 in cross-sectional view. However, embodiments according to the present disclosure are not limited thereto, and the cross-sectional shape may vary depending on the horizontal loop arrangement and the vertical loop arrangement of the first and second bridge lines BP1 and BP2.

As shown in FIG. 8, in the digitizer 600 according to some embodiments, when the number of lines located between adjacent holes HL in a plan view increases or when the number of lines densely located in the peripheral area NAA increases, some lines of the first sensing coil RF and the second sensing coil CF may be distributed and located in several layers by the bridge lines BP1 and BP2. Accordingly, the density of the sensing coils located between the holes may be increased by increasing the number of sensing coils located between the holes, thereby providing the digitizer 600 with improved sensing performance. Further, it is possible to provide the digitizer 600 with improved reliability by preventing or reducing interference between the lines densely arranged in the peripheral area NAA.

The first insulating layer ILD1 may be located on the first bridge line BP1. The first insulating layer ILD1 may be located on the front surface 600_U of the digitizer 600 to cover the first bridge lines BP1.

The second insulating layer ILD2 may be located on the second bridge line BP2. The second insulating layer ILD2 may be located on the back surface 600_B of the digitizer 600 to cover the second bridge lines BP2.

According to some embodiments, the first insulating layer ILD1 and the second insulating layer ILD2 may have a color (e.g., a set or predetermined color). For example, the first insulating layer ILD1 and the second insulating layer ILD2 may have a black color. This may be formed by applying an insulating material containing a dye and/or a pigment on a base layer BSL. Each of the first insulating layer ILD1 and the second insulating layer ILD2 may include a single or multiple inorganic or organic layers.

In some embodiments, the digitizer 600 may include a first wiring layer F1, a second wiring layer F2, a third wiring layer F3, and a fourth wiring layer F4. The third wiring layer F3 may be located on the fourth wiring layer F4, the second wiring layer F2 may be located on the third wiring layer F3, and the first wiring layer F1 may be located on the second wiring layer F2.

Although it is illustrated in the drawing that four wiring layers F1, F2, F3, and F4 are located, embodiments according to the present disclosure are not limited thereto. The number of the wiring layers F1, F2, F3, and F4 may vary depending on a design method such as the loop density and the loop arrangement of the digitizer 600.

The first wiring layer F1 may include the first bridge line BP1, the second wiring layer F2 may include the first sensing coil RF, the third wiring layer F3 may include the second sensing coil CF, and the fourth wiring layer F4 may include the second bridge line BP2.

FIG. 12 is a cross-sectional view showing a base layer of a digitizer according to some embodiments. FIG. 13 is a plan view showing a base layer of a digitizer according to some embodiments.

Referring to FIGS. 12 and 13, the base layer BSL may include the first base layer BSL1, the second base layer BSL2 located on one surface of the first base layer BSL1, and the third base layer BSL3 located on the other surface of the first base layer BLS1.

The base layer BSL may include a matrix MT including a filler and an elastomer, and weave-shaped fiber lines GFL1 and GFL2 located in the matrix MT. Each of the first to third base layers BSL1, BSL2, and BSL3 may be a prepreg including the fiber lines GFL1 and GFL2 extending in one direction. The fiber lines GFL1 and GFL2 may be glass fiber-reinforced plastic (GFRP).

Each of the fiber lines GFL1 and GFL2 may be provided in the form of a bundle of a plurality of glass fibers GL. The diameter of one strand of the glass fiber GL included in one fiber line may be 3 µm or more and 10 µm or less. However, the diameter of the glass fiber GL is not limited to the above numerical range.

The fiber lines GFL1 and GFL2 may be alternately arranged along the first direction DR1 and the second direction DR2 to have a weave shape in a plan view. For example, the first base layer BSL1 may include the first fiber line GFL1 extending in the second direction DR2, and the second base layer BSL2 and the third base layer BSL3 may include the second fiber line GFL2 extending in the first direction DR1.

The fiber lines GFL1 and GFL2 may be located in the matrix MT. The matrix MT according to some embodiments may include at least one of epoxy, polyester, polyamide, polycarbonate, polypropylene, polybutylene, or vinyl ester.

The matrix MT may include a filler and an elastomer.

The filler included in the matrix MT may include at least one of silica, barium sulphate, sintered talc, barium titanate, titanium oxide, clay, alumina, mica, boehmite, zinc borate, or zinc tinate.

The elastomer included in the matrix MT may be a polymer material that exhibits rubber elasticity. For example, the elastomer may include at least one of butadiene rubber, stylene-butadiene rubber, isoprene rubber, stylene-isoprene rubber, polyester rubber, polybutadiene, hydrogenated polybutadiene, nitrile-butadiene rubber, acryl rubber, or silicone rubber.

In the digitizer 600 according to some embodiments, the digitizer 600 that recognizes a touch input and a support member of a prepreg structure that performs a support function are integrally combined, so that the thickness of the display device 10 may be relatively reduced.

Further, the base layer BSL of the digitizer 600 according to some embodiments includes a fiber bundle of glass fiber reinforced plastic located in the matrix MT, so that the lower part of the display panel 100 is protected during folding, and the matrix MT of the base layer BSL includes an elastomer that is a polymer material having elasticity, so that occurrence of cracks in the folding portion 630 of the digitizer 600 due to an external force during the folding operation of the display device 10 may be prevented or reduced.

The digitizer 600 according to some embodiments may function as a protective member and a support member and may also function as a sensing member. Accordingly, a separate metal plate protecting the display panel 100 may be omitted, and a digitizer separately arranged at the folding portion 630 may be omitted. Accordingly, a slim display device 10 with a relatively reduced cost may be provided.

Hereinafter, the arrangement of the loop included in the digitizer 600 and the arrangement of the lines included in the loop will be described as an example.

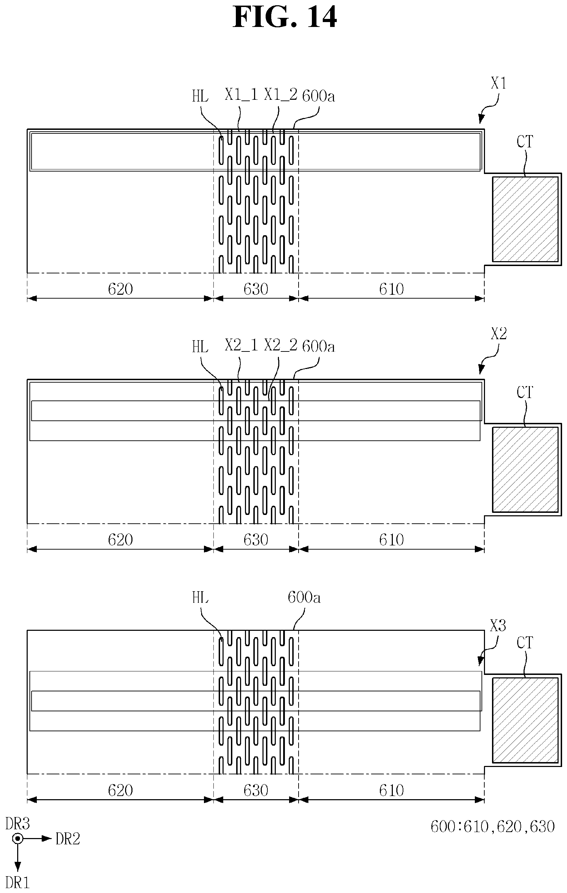

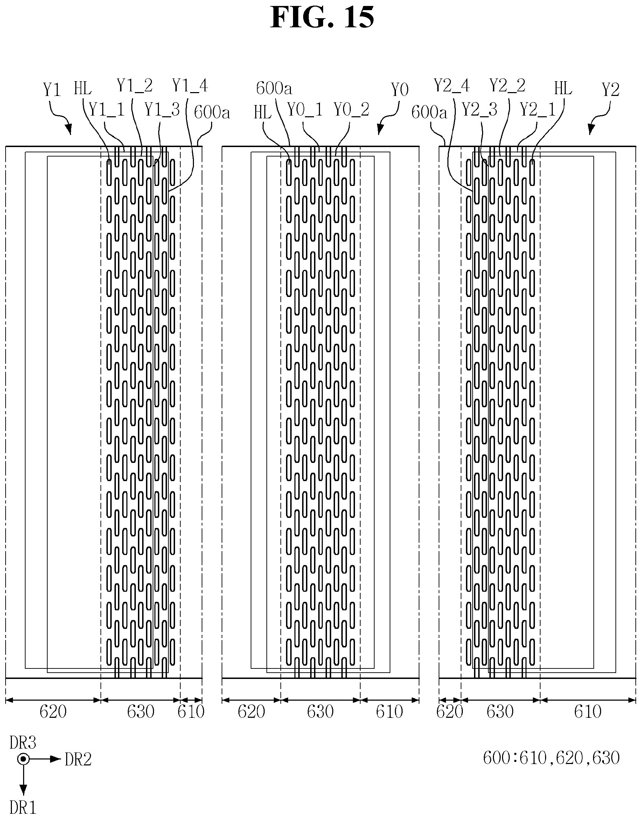

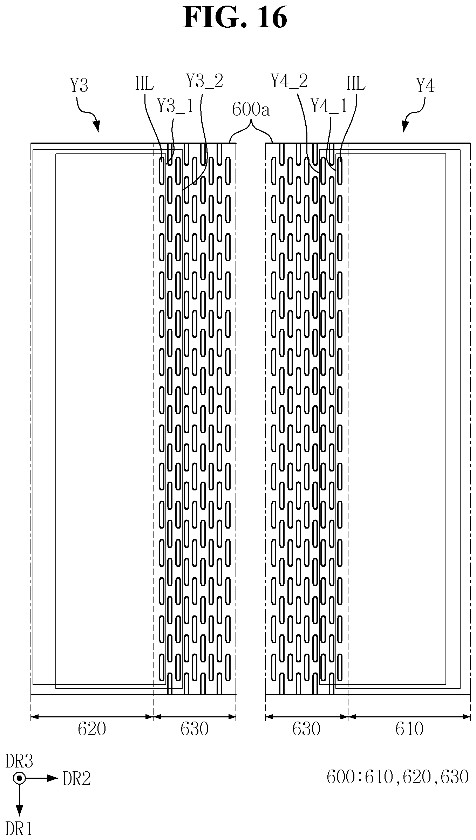

FIG. 14 is a plan view showing horizontal loops according to some embodiments. FIGS. 15 and 16 are plan views showing vertical loops according to some embodiments.

Referring to FIGS. 14 to 16, the digitizer 600 may include horizontal loops X1, X2, and X3 (e.g., a first loop group) having long sides extending in the second direction DR2 and short sides extending in the first direction DR1 and vertical loops Y0, Y1, Y2, Y3, and Y4 (e.g., a second loop group) having long sides extending in the first direction DR1 and short sides extending in the second direction DR2.

The horizontal loops X1, X2, and X3 and the vertical loops Y0, Y1, Y2, Y3, and Y4 may each include at least one closed ring. For example, as shown in the drawing, the horizontal loops X1, X2, and X3 and the vertical loops Y0, Y1, Y2, Y3, and Y4 may each include two closed rings. However, the number of rings included in the respective loops is not limited thereto.

In the digitizer 600 according to some embodiments, the sensing sensitivity of the digitizer 600 may be improved as the number of rings included in the respective loops increases.

As shown in FIG. 14, the horizontal loops X1, X2, and X3 may be arranged along the first direction DR1. For example, the second horizontal loop X2 may be located on one side of the first horizontal loop X1 in the first direction DR1, and the third horizontal loop X3 may be located on one side of the second horizontal loop X2 in the first direction DR1.

In some embodiments, the horizontal loops X1, X2, and X3 may at least partially overlap each other in the second direction DR2. For example, at least a part of the first horizontal loop X1 may overlap the second horizontal loop X2 in the second direction DR2, and at least a part of the second horizontal loop X2 may overlap the third horizontal loop X3 in the second direction DR2.

The first horizontal loop X1 may be located adjacent to one end 600a of the digitizer 600 in the first direction DR1. The first horizontal loop X1 may include a first line X1_1 and a second line X1_2 crossing the folding portion 630 in the second direction DR2.

Most of the first ring and the second ring included in the first horizontal loop X1 may overlap each other in the second direction DR2. For example, most of the areas of the first ring including the first line X1_1 of the first horizontal loop X1 and the second ring including the second line X1_2 of the first horizontal loop X1 may overlap each other in the second direction DR2. According to some embodiments, the first ring of the first horizontal loop X1 may overlap the second ring of the first horizontal loop X1 by 90% (or approximately 90%) or more of the area of the first ring.

The second horizontal loop X2 may include a first line X2_1 and a second line X2_2 crossing the folding portion 630 in the second direction DR2.

The first ring and the second ring included in the second horizontal loop X2 may partially overlap each other in the second direction DR2. The overlapping area of the first ring and the second ring included in the second horizontal loop X2 may be smaller than the overlapping area of the first ring and the second ring included in the first horizontal loop X1. For example, a partial area of the first ring included in the second horizontal loop X2 and a partial area of the second ring included in the second horizontal loop X2 may overlap each other in the second direction DR2. According to some embodiments, the first ring of the second horizontal loop X2 may overlap the second ring of the second horizontal loop X2 by 50% (or approximately 50%) of the area of the first ring.

Because the third horizontal loop X3 may have the same shape as that of the second horizontal loop X2, some repetitive description of the third horizontal loop X3 may be omitted.

As shown in FIGS. 15 and 16, the vertical loops Y0, Y1, Y2, Y3, and Y4 may be arranged along the second direction DR2. For example, the central vertical loop Y0 may be arranged at the center (or approximately at the center) of the folding portion 630. The first vertical loop Y1 may be located on the other side of the central vertical loop Y0 in the second direction DR2, and the second vertical loop Y2 may be located on one side of the central vertical loop Y0 in the second direction DR2. The third vertical loop Y3 may be located on the other side of the first vertical loop Y1 in the second direction DR2, and the fourth vertical loop Y4 may be located on one side of the second vertical loop Y2 in the second direction DR2.

In some embodiments, the vertical loops Y0, Y1, Y2, Y3, and Y4 may at least partially overlap each other in the first direction DR1. For example, the first vertical loop Y1 and the second vertical loop Y2 may overlap the central vertical loop Y0 in the first direction DR1, the third vertical loop Y3 may overlap the first vertical loop Y1 in the first direction DR1, and the fourth vertical loop Y4 may overlap the second vertical loop Y2 in the first direction DR1.

The first ring and the second ring included in each of the vertical loops Y0, Y1, Y2, Y3, and Y4 may partially overlap each other in the first direction DR1. For example, partial areas of the first ring and the second ring included in the central vertical loop Y0 may overlap each other in the first direction DR1, partial areas of the first ring and the second ring included in the first vertical loop Y1 may overlap each other in the first direction DR1, and partial areas of the first ring and the second ring included in the second vertical loop Y2 may overlap each other in the first direction DR1. Partial areas of the first ring and the second ring included in the third vertical loop Y3 may overlap each other in the first direction DR1, and partial areas of the first ring and the second ring included in the fourth vertical loop Y4 may overlap each other in the first direction DR1. According to some embodiments, the first ring included in each of the vertical loops Y0, Y1, Y2, Y3, and Y4 may overlap the second ring by 50% (or approximately 50%) or more and less than 90% of the area of the first ring.

The central vertical loop Y0 may be located at the center (or substantially at the center) of the folding portion 630. The long side of the central vertical loop Y0 may be located at the first non-folding portion 610 and the second non-folding portion 620. The central vertical loop Y0 may include a first line Y0_1 and a second line Y0_2 crossing the folding portion 630 in the second direction DR2.

The first vertical loop Y1 may be arranged to be shifted from the folding portion 630 toward the second non-folding portion 620. The long side of the first vertical loop Y1 may be located at the second non-folding portion 620 and the folding portion 630. The first vertical loop Y1 may include a first line Y1_1 and a second line Y1_2 crossing the folding portion 630 in the second direction DR2, and a third line Y1_3 and a fourth line Y1_4 crossing the folding portion 630 in the first direction DR1.

The second vertical loop Y2 may be arranged to be shifted from the folding portion 630 toward the first non-folding portion 610. The long side of the second vertical loop Y2 may be located at the first non-folding portion 610 and the folding portion 630. The second vertical loop Y2 may include a first line Y2_1 and a second line Y2_2 crossing the folding portion 630 in the second direction DR2, and a third line Y2_3 and a fourth line Y2_4 crossing the folding portion 630 in the first direction DR1.

The third vertical loop Y3 may be arranged to be shifted from the folding portion 630 toward the second non-folding portion 620. The degree of shift of the third vertical loop Y3 from the folding portion 630 toward the second non-folding portion 620 may be greater than that of the first vertical loop Y1. The long side of the third vertical loop Y3 may be located at the second non-folding portion 620 and the folding portion 630. The third vertical loop Y3 may include a first line Y3_1 and a second line Y3_2 crossing the folding portion 630 in the first direction DR1.

The fourth vertical loop Y4 may be arranged to be shifted from the folding portion 630 toward the first non-folding portion 610. The degree of shift of the fourth vertical loop Y4 from the folding portion 630 toward the first non-folding portion 610 may be greater than that of the second vertical loop Y2. The long side of the fourth vertical loop Y4 may be located at the first non-folding portion 610 and the folding portion 630. The fourth vertical loop Y4 may include a first line Y4_1 and a second line Y4_2 crossing the folding portion 630 in the first direction DR1.

In some embodiments, the long side of the first horizontal loop X1, the long side of the second horizontal loop X2, and the short sides of the vertical loops Y0, Y1, Y2, Y3, and Y4 may be located adjacent to one end 600a of the digitizer 600 in the first direction DR1.

In the first non-folding portion 610 and the second non-folding portion 620, the lines located adjacent to one end 600a of the digitizer 600 may be densely located in the peripheral area NAA (see FIG. 8).

Because the holes HL are located in the folding portion 630, the lines located at the folding portion 630 may cross the folding portion 630 while bypassing the holes HL. Because the gap between the holes HL is smaller than the width of the peripheral area NAA of the first non-folding portion 610 and the second non-folding portion 620, it may be difficult to arrange the lines crossing the folding portion 630 among the lines located adjacent to one end 600a of the digitizer 600 such that they do not interfere with each other.

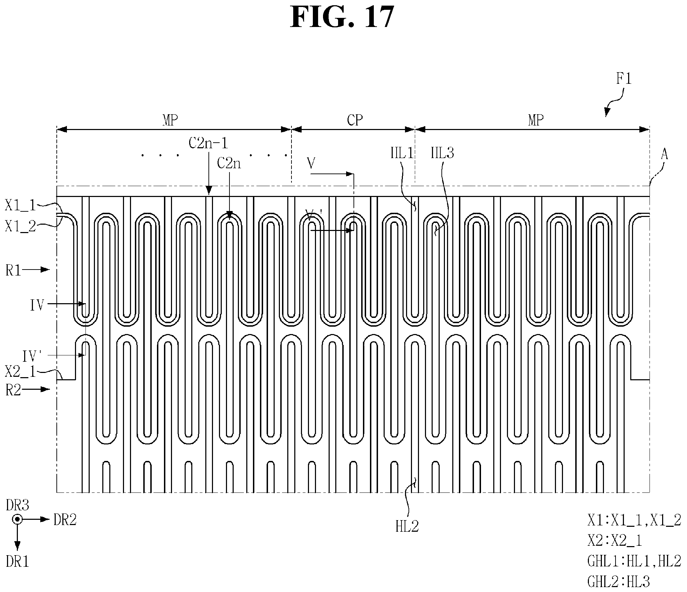

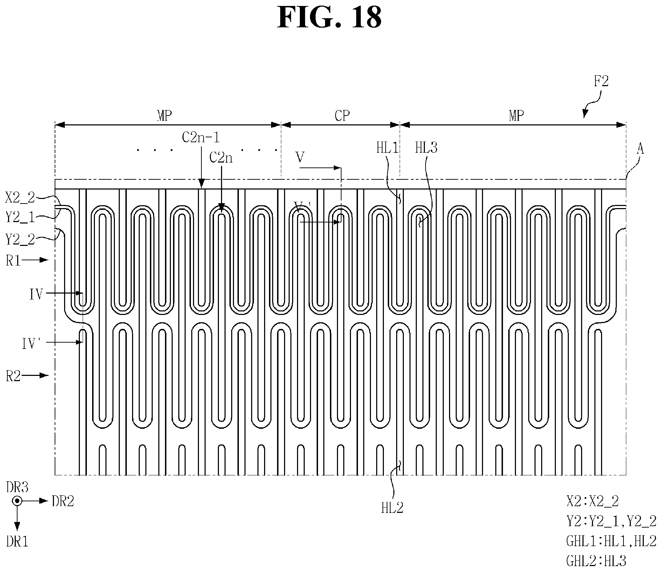

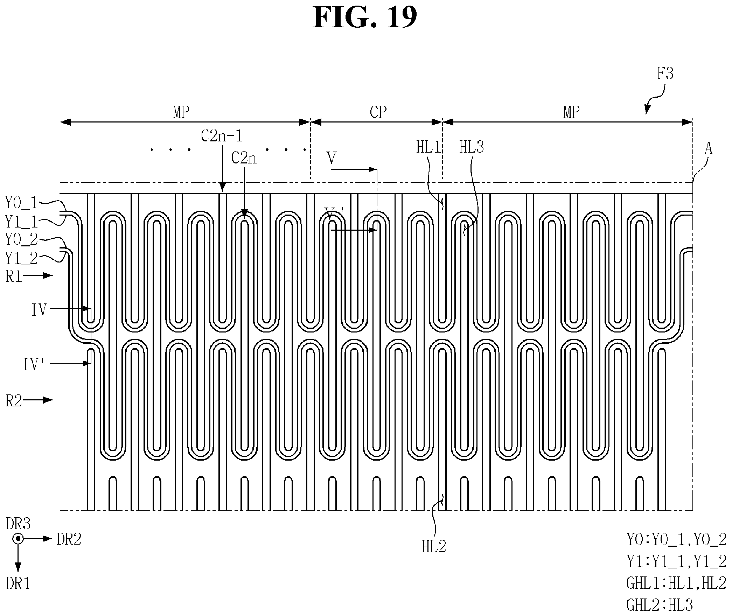

In the digitizer 600 according to some embodiments, among the lines located adjacent to one end 600a of the digitizer 600, the lines crossing the folding portion 630 are distributed and located in a first row R1 (see FIG. 17), a second row R2 (see FIG. 17), and the first to fourth wiring layers F1, F2, F3, and F4, so that interference between the respective lines may be minimized or relatively reduced. This will be described later with reference to FIGS. 17 to 21B.

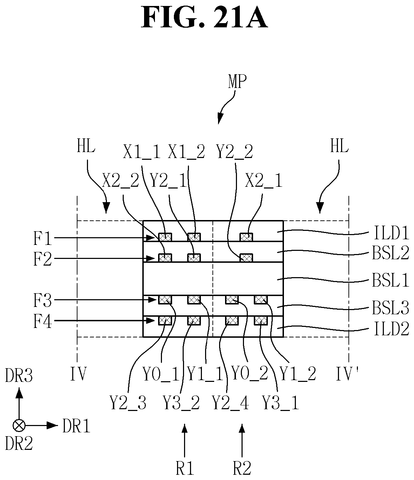

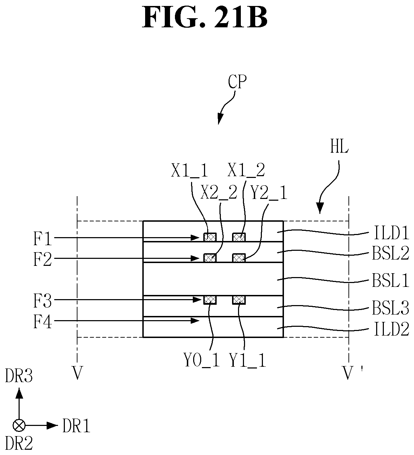

FIGS. 17 to 20 are enlarged plan views showing loop lines respectively located in first to fourth wiring layers in area A of FIG. 8. FIG. 21A is a cross-sectional view showing a peripheral part of a folding portion taken along the line IV-IV' of FIG. 17 to 20. FIG. 21B is a cross-sectional view showing a central part of a folding portion taken along the line V-V' of FIGS. 17 to 20.

Referring to FIGS. 17 to 21B, in addition to FIGS. 14 to 16, the folding portion 630 may include the plurality of holes HL. The plurality of holes HL may include a first group hole GHL1 located in an odd column C2n-1 and a second group hole GHL2 located in an even column C2n.

The odd column C2n-1 and the even column C2n may be alternately arranged in the second direction DR2. The first group hole GHL1 and the second group hole GHL2 may be alternately arranged in the second direction DR2. The first group hole GHL1 and the second group hole GHL2 may be arranged to be spaced apart from each other in the second direction DR2.

The first group hole GHL1 may include a first hole HL1 and a second hole HL2 arranged side by side in the first direction DR1. The first hole HL1 and the second hole HL2 may be arranged to be spaced apart from each other in the first direction DR1. The second group hole GHL2 may include a third hole HL3 arranged to be spaced apart from the first hole HL1 and the second hole HL2 in the second direction DR2.

The third hole HL3 may overlap each of the first hole HL1 and the second hole HL2 in the second direction DR2. The folding portion 630 may include the first row R1 where the first hole HL1 and the third hole HL3 overlap in the second direction DR2, and the second row R2 where the second hole HL2 and the third hole HL3 overlap in the second direction DR2.

The first line X1_1 of the first horizontal loop X1 and the second line X1_2 of the first horizontal loop X1 may be located in the same first row R1 in the folding portion 630. For example, the first line X1_1 of the first horizontal loop X1 and the second line X1_2 of the first horizontal loop X1 may cross the folding portion 630 in the second direction DR2 while bypassing the first hole HL1 and the third hole HL3 along the first row R1.

The first line X2_1 of the second horizontal loop X2 may be located in the second row R2 in the folding portion 630, and the second line X2_2 of the second horizontal loop X2 may be located in the first row R1 in the folding portion. For example, the first line X2_1 of the second horizontal loop X2 may cross the folding portion 630 in the second direction DR2 while bypassing the second hole HL2 and the third hole HL3 along the second row R2, and the second line X2_2 of the second horizontal loop X2 may cross the folding portion 630 in the second direction DR2 while bypassing the first hole HL1 and the third hole HL3 along the first row R1.

The first line Y0_1 of the central vertical loop Y0 may be located in the first row R1 in the folding portion 630, and the second line Y0_2 of the central vertical loop Y0 may be located in the second row R2 in the folding portion 630. For example, the first line Y0_1 of the central vertical loop Y0 may cross the folding portion 630 in the second direction DR2 while bypassing the first hole HL1 and the third hole HL3 along the first row R1, and the second line Y0_2 of the central vertical loop Y0 may cross the folding portion 630 in the second direction DR2 while bypassing the second hole HL2 and the third hole HL3 along the second row R2.

The first line Y1_1 of the first vertical loop Y1 may be located in the first row R1 in the folding portion 630, and the second line Y1_2 of the first vertical loop Y1 may be located in the second row R2 in the folding portion 630. For example, the first line Y1_1 of the first vertical loop Y1 may cross the folding portion 630 in the second direction DR2 while bypassing the first hole HL1 and the third hole HL3 along the first row R1, and the second line Y1_2 of the first vertical loop Y1 may cross the folding portion 630 in the second direction DR2 while bypassing the second hole HL2 and the third hole HL3 along the second row R2.

The third line Y1_3 of the first vertical loop Y1 may be located in at least a part of the first row R1 in the folding portion 630, and the fourth line Y1_4 of the first vertical loop Y1 may be located in at least a part of the second row R2 in the folding portion 630. For example, the third line Y1_3 of the first vertical loop Y1 may cross the folding portion 630 in the second direction DR2 while bypassing the first hole HL1 and the third hole HL3 along the first row R1 and then extend in the first direction DR1, and the fourth line Y1_4 of the first vertical loop Y1 may cross the folding portion 630 in the second direction DR2 while bypassing the second hole HL2 and the third hole HL3 along the second row R2 and then extend in the first direction DR1.

For example, the folding portion 630 may include a central part CP and a peripheral part MP located on both sides of the central part CP. The third line Y1_3 and the fourth line Y1_4 of the first vertical loop Y1 may cross at least a part of the peripheral part MP of the folding portion 630 in the second direction DR2 and then extend in the first direction DR1. In this case, the third line Y1_3 and the fourth line Y1_4 of the first vertical loop Y1 may not be located at the central part CP of the folding portion 630. In the digitizer 600 and the display device 10 including the same according to some embodiments, the occurrence of cracks in the wiring may be minimized or relatively reduced by minimizing or relatively reducing the wiring arrangement at the central part CP where the folding stress is largest when the display device 10 is folded.

The central part CP may be located at the center of the folding portion 630. The central part CP may extend in the first direction DR1. The peripheral part MP may be located on both sides of the central part CP in the second direction DR2. The peripheral part MP may be located between the central part CP and the first non-folding portion 610 and between the central part CP and the second non-folding portion 620 in the second direction DR2. The peripheral part MP may extend in the first direction DR1.

The first line Y2_1 of the second vertical loop Y2 may be located in the first row R1 in the folding portion 630, and the second line Y2_2 of the second vertical loop Y2 may be located in the second row R2 in the folding portion 630. For example, the first line Y2_1 of the second vertical loop Y2 may cross the folding portion 630 in the second direction DR2 while bypassing the first hole HL1 and the third hole HL3 along the first row R1, and the second line Y2_2 of the second vertical loop Y2 may cross the folding portion 630 in the second direction DR2 while bypassing the second hole HL2 and the third hole HL3 along the second row R2.

The third line Y2_3 of the second vertical loop Y2 may be located in at least a part of the first row R1 in the folding portion 630, and the fourth line Y2_4 of the second vertical loop Y2 may be located in at least a part of the second row R2 in the folding portion 630. For example, the third line Y2_3 of the second vertical loop Y2 may cross the folding portion 630 in the second direction DR2 while bypassing the first hole HL1 and the third hole HL3 along the first row R1 and then extend in the first direction DR1, and the fourth line Y2_4 of the second vertical loop Y2 may cross the folding portion 630 in the second direction DR2 while bypassing the second hole HL2 and the third hole HL3 along the second row R2 and then extend in the first direction DR1.

For example, the third line Y2_3 and the fourth line Y2_4 of the second vertical loop Y2 may cross at least a part of the peripheral part MP of the folding portion 630 in the second direction DR2 and then extend in the first direction DR1. In this case, the third line Y2_3 and the fourth line Y2_4 of the second vertical loop Y2 may not be located at the central part CP of the folding portion 630. In the digitizer 600 and the display device 10 including the same according to some embodiments, the occurrence of cracks in the wiring may be minimized or relatively reduced by minimizing or relatively reducing the wiring arrangement at the central part CP where the folding stress is largest when the display device 10 is folded.

The first line Y3_1 of the third vertical loop Y3 may be located in at least a part of the second row R2 in the folding portion 630, and the second line Y3_2 of the third vertical loop Y3 may be located in at least a part of the first row R1 in the folding portion 630. For example, the first line Y3_1 of the third vertical loop Y3 may cross the folding portion 630 in the second direction DR2 while bypassing the second hole HL2 and the third hole HL3 along the second row R2 and then extend in the first direction DR1, and the second line Y3_2 of the third vertical loop Y3 may cross the folding portion 630 in the second direction DR2 while bypassing the first hole HL1 and the third hole HL3 along the first row R1 and then extend in the first direction DR1.

For example, the first line Y3_1 and the second line Y3_2 of the third vertical loop Y3 may cross at least a part of the peripheral part MP of the folding portion 630 in the second direction DR2 and then extend in the first direction DR1. In this case, the first line Y3_1 and the second line Y3_2 of the third vertical loop Y3 may not be located at the central part CP of the folding portion 630. In the digitizer 600 and the display device 10 including the same according to some embodiments, the occurrence of cracks in the wiring may be minimized or relatively reduced by minimizing or relatively reducing the wiring arrangement at the central part CP where the folding stress is largest when the display device 10 is folded.

The first line Y4_1 of the fourth vertical loop Y4 may be located in at least a part of the second row R2 in the folding portion 630, and the second line Y4_2 of the fourth vertical loop Y4 may be located in at least a part of the first row R1 in the folding portion 630. For example, the first line Y4_1 of the fourth vertical loop Y4 may cross the folding portion 630 in the second direction DR2 while bypassing the second hole HL2 and the third hole HL3 along the second row R2 and then extend in the first direction DR1, and the second line Y4_2 of the fourth vertical loop Y4 may cross the folding portion 630 in the second direction DR2 while bypassing the first hole HL1 and the third hole HL3 along the first row R1 and then extend in the first direction DR1.

For example, the first line Y4_1 and the second line Y4_2 of the fourth vertical loop Y4 may cross at least a part of the peripheral part MP of the folding portion 630 in the second direction DR2 and then extend in the first direction DR1. In this case, the first line Y4_1 and the second line Y4_2 of the fourth vertical loop Y4 may not be located at the central part CP of the folding portion 630. In the digitizer 600 and the display device 10 including the same according to some embodiments, the occurrence of cracks in the wiring may be minimized or relatively reduced by minimizing or relatively reducing the wiring arrangement at the central part CP where the folding stress is largest when the display device 10 is folded.

In some embodiments, a maximum of two lines may be located in each of the first row R1 and the second row R2. In this case, four lines may be located between the first hole HL1 and the second hole HL2 in the first direction DR1. However, embodiments according to the present disclosure are not limited thereto, and the number of lines that may be located between the first hole HL1 and the second hole HL2 in the first direction DR1 may be changed.

In the digitizer 600 according to some embodiments, the maximum number of lines that may be accommodated in the folding portion 630 may be increased by increasing the number of layers in which lines are located. For example, as shown in FIG. 21A, when the digitizer 600 includes the first to fourth wiring layers F1, F2, F3, and F4, a total of 16 lines (e.g., 4 * 4 layers) may be located between the first hole HL1 and the second hole HL2 in the first direction DR1.

According to some embodiments, as shown in FIG. 21A, the first line X1_1 and the second line X1_2 of the first horizontal loop X1, and the first line X2_1 of the second horizontal loop X2 may be located in the first wiring layer F1. The second line X2_2 of the second horizontal loop X2, and the first line Y2_1 and the second line Y2_2 of the second vertical loop Y2 may be located in the second wiring layer F2. The first line Y0_1 and the second line Y0_2 of the central vertical loop Y0, and the first line Y1_1 and the second line Y1_2 of the first vertical loop Y1 may be located in the third wiring layer F3. The third line Y1_3 and the fourth line Y1_4 of the first vertical loop Y1, the third line Y2_3 and fourth line Y2_4 of the second vertical loop Y2, the first line Y3_1 and the second line Y3_2 of the third vertical loop Y3, and the first line Y4_1 and the second line Y4_2 of the fourth vertical loop Y4 may be located in the fourth wiring layer F4.

The above-described arrangement of the lines in the first row R1 and the second row R2 and the first to fourth wiring layers F1, F2, F3, and F4 is shown in the following Table 1.

**Table 1**

| | First wiring layer (F1) | Second wiring layer (F2) | Third wiring layer (F3) | Fourth wiring layer (F4) |
|---|---|---|---|---|
| First row (R1) | X1_1, X1_2 | X2_2, Y2_1 | Y0_1, Y1_1 | Left side: Y2_3, Y3_2 |
| | | | | Right side: Y1_3, Y4 2 |
| Second row (R2) | X2_1 | Y2_2 | Y0_2, Y1_2 | Left side: Y2_4, Y3_1 |
| | | | | Right side: Y1_4, Y4 1 |

In the digitizer 600 according to some embodiments, the lines of the vertical loops Y0, Y1, Y2, Y3, and Y4 are evenly located in the first row R1 and the second row R2, thereby preventing or reducing instances of an unrecognized area occurring in an area adjacent to one end 600a of the digitizer 600 in the first direction DR1 and relatively improving the sensing uniformity.

For example, by arranging the lines of the vertical loops Y0, Y1, Y2, Y3, and Y4 in equal numbers in the first row R1 and the second row R2 as in the case of arranging the first line Y0_1 of the central vertical loop Y0 in the first row R1 and arranging the second line Y0_2 thereof in the second row R2, it may be possible to prevent or reduce the occurrence of an unrecognized area and relatively improve the sensing uniformity.

However, the arrangement of the lines of the vertical loops Y0, Y1, Y2, Y3, and Y4, which are arranged in equal numbers in the first row R1 and the second row R2, is not limited to the illustration in the drawing and the Table 1. For example, the first line Y0_1 of the central vertical loop Y0 may be located in the second row R2, and the second line Y0_2 thereof may be located in the first row R1.

In some embodiments, among the lines passing through the folding portion 630, the vertical lines of the first to fourth vertical loops Y1, Y2, Y3, and Y4 may be located in a lowermost layer. Among the lines passing through the folding portion 630, the horizontal lines of the horizontal loops X1, X2, and X3, and the horizontal lines of the central vertical loop Y0 and the first and second vertical loops Y1 and Y2 may be located in a layer higher than the lowermost layer.

The lowermost layer may refer to a layer located close to a surface exposed to the outside between one surface and the other surface (or top surface and bottom surface) of the display device 10 when the display device 10 is folded. For example, in FIG. 21B, if the surface adjacent to the first wiring layer F1 is a surface that is folded inward when the display device 10 is folded and the surface adjacent to the fourth wiring layer F4 is a surface exposed to the outside, the fourth wiring layer F4 may be the lowermost layer.

The lowermost layer is a surface that is located outermost when the display device 10 is folded, and thus may have a folding radius larger than that of another layer. Accordingly, the folding stress applied to the line located in the lowermost layer may be large.

In the digitizer 600 and the display device 10 including the same according to some embodiments, the vertical lines of the first to fourth vertical loops Y1, Y2, Y3, and Y4 among the lines passing through the folding portion 630 are located in the lowermost layer, and the horizontal lines of the horizontal loops X1, X2, and X3, and the horizontal lines of the central vertical loop Y0 and the first and second vertical loops Y1 and Y2 among the lines passing through the folding portion 630 are located in a layer higher than the lowermost layer, so that the occurrence of cracks in the wiring in the folding portion 630 may be minimized or relatively reduced.

For example, as shown in FIG. 21A, the first line X1_1 and the second line X1_2 of the first horizontal loop X1, the first line X2_1 and the second line X2_2 of the second horizontal loop X2, the first line Y0_1 and the second line Y0_2 of the central vertical loop Y0, the first line Y1_1 and the second line Y1_2 of the first vertical loop Y1, and the first line Y2_1 and the second line Y2_2 of the second vertical loop Y2 may be located in layers (e.g., the first to third wiring layers F1, F2, and F3) higher than the lowermost layer. On the other hand, the third line Y1_3 and the fourth line Y1_4 of the first vertical loop Y1, the third line Y2_3 and the fourth line Y2_4 of the second vertical loop Y2, the first line Y3_1 and the second line Y3_2 of the third vertical loop Y3, and the first line Y4_1 and the second line Y4_2 of the fourth vertical loop Y4 may be located in the lowermost layer (e.g., the fourth wiring layer F4).

Further, the folding stress is larger at the central part CP of the folding portion 630 than at the peripheral part MP thereof, so that the central part CP of the lowermost layer may be a portion where the folding stress is largest. Because the above-described vertical lines are located in the lowermost layer and the above-described vertical lines are located only at the peripheral part MP except the central part CP, the occurrence of cracks in the wiring may be further minimized or relatively reduced.

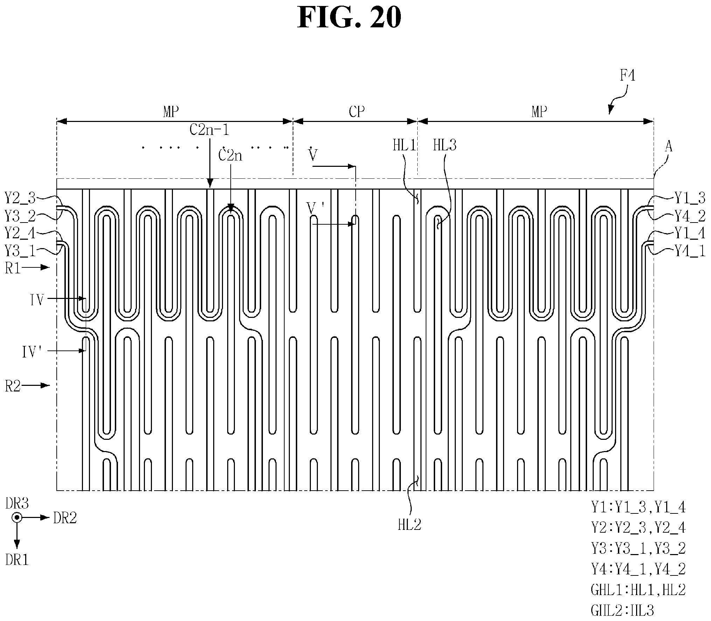

For example, as shown in FIG. 20, the third line Y1_3 and the fourth line Y1_4 of the first vertical loop Y1, the third line Y2_3 and the fourth line Y2_4 of the second vertical loop Y2, the first line Y3_1 and the second line Y3_2 of the third vertical loop Y3, and the first line Y4_1 and the second line Y4_2 of the fourth vertical loop Y4 may be located only at the peripheral part MP, and may not be located at the central part CP. Accordingly, as shown in FIG. 21B, no line may be located in the lowermost layer, e.g., at the central part CP of the fourth wiring layer F4. Therefore, no line is located at the central part CP of the lowermost layer where the folding stress is largest, so that the occurrence of cracks in the wiring may be minimized or relatively reduced.

Meanwhile, the arrangement of the respective lines for the first to third wiring layers F1, F2, and F3 is not limited to the illustration in the drawing and the Table 1. For example, although it is illustrated that the horizontal loops X1 and X2 are located in the first and second wiring layers F1 and F2, and the first line Y0_1 and the second line Y0_2 of the central vertical loop Y0 and the first and second lines Y1_1, Y1_2, Y2_1, and Y2_2 of the first and second vertical loops Y1 and Y2 are located in the second to fourth wiring layers F2, F3, and F4, embodiments according to the present disclosure are not limited thereto.

According to some embodiments, the horizontal loops X1 and X2 may be located in the third wiring layer F3 as well as the first and second wiring layers F1 and F2. According to some embodiments, the central vertical loop Y0 may be located in the first and second wiring layers F1 and F2 as well as the third wiring layer F3. According to some embodiments, the first line Y1_1 and the second line Y1_2 of the first vertical loop Y1 may be located in the first and second wiring layers F1 and F2 as well as the third wiring layer F3. According to some embodiments, the first line Y2_1 and the second line Y2_2 of the second vertical loop Y2 may be located in the first and third wiring layers F1 and F3 as well as the second wiring layer F2.

Hereinafter, further details of the display device according to some embodiments will be described. In the following embodiments, some repetitive description of the same components as those of the above-described embodiments, which are denoted by like reference numerals, may be omitted or simplified, and differences will be mainly described.

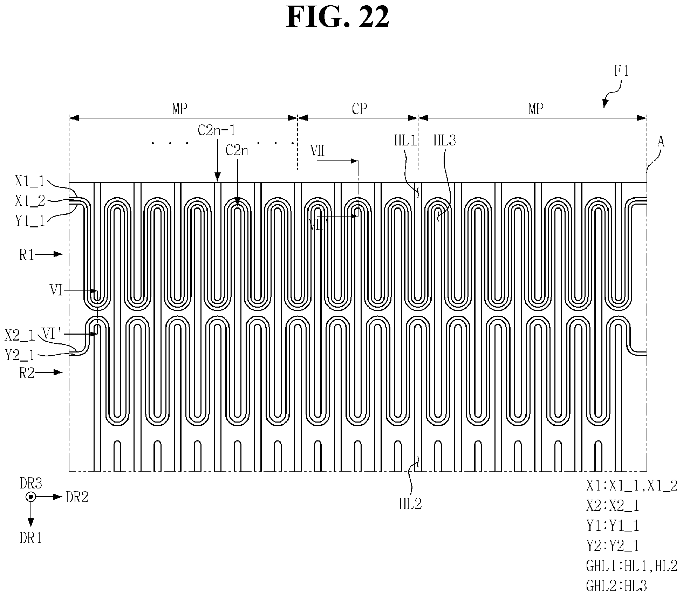

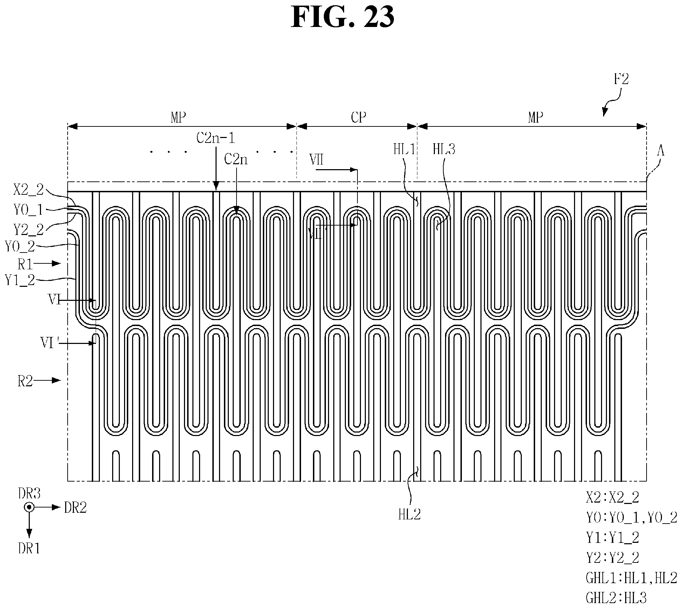

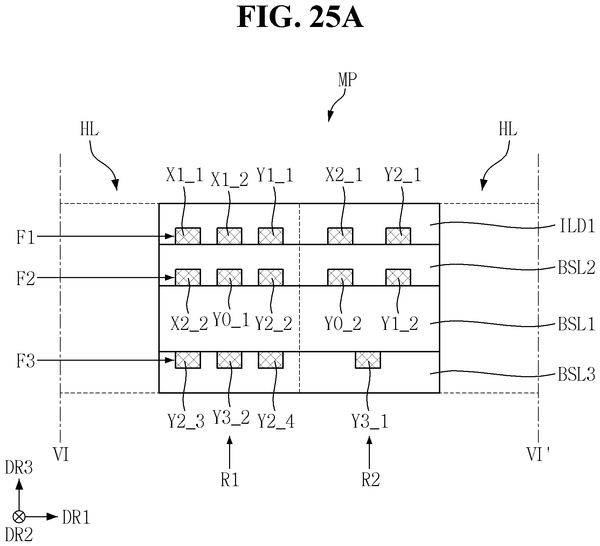

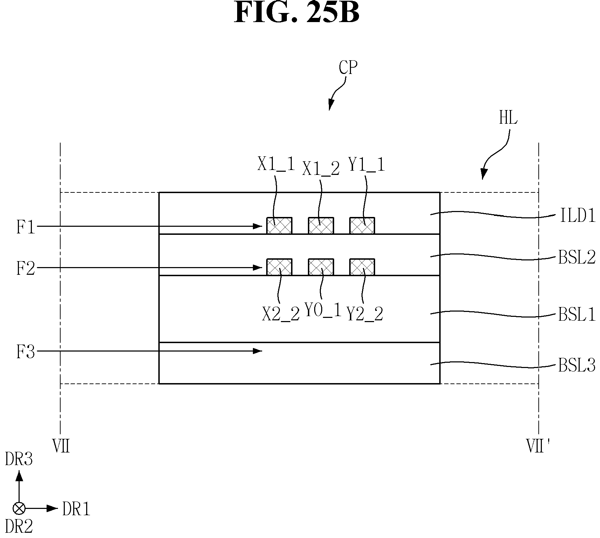

FIGS. 22 to 24 are enlarged plan views showing loop lines respectively located in first to fourth wiring layers of a display device according to some embodiments in the area A of FIG. 8. FIG. 25A is a cross-sectional view showing a peripheral part of a folding portion taken along the line VI-VI' of FIGS. 22 to 24. FIG. 25B is a cross-sectional view showing a central part of a folding portion taken along the line VII-VII of FIGS. 22 to 24.

Referring to FIGS. 22 to 25B, the display device 10 according to some embodiments is different from the display device 10 according to embodiments described with reference to FIG. 17 in that the number of wiring layers and the number of lines crossing one row are different.

For example, according to some embodiments, a maximum of three lines may be located in each of the first row R1 and the second row R2. In this case, six lines may be located between the first hole HL1 and the second hole HL2 in the first direction DR1.

The first line X1_1 of the first horizontal loop X1 and the second line X1_2 of the first horizontal loop X1 may be located in the same first row R1 in the folding portion 630. For example, the first line X1_1 of the first horizontal loop X1 and the second line X1_2 of the first horizontal loop X1 may cross the folding portion 630 in the second direction DR2 while bypassing the first hole HL1 and the third hole HL3 along the first row R1.

The first line X2_1 of the second horizontal loop X2 may be located in the second row R2 in the folding portion 630, and the second line X2_2 of the second horizontal loop X2 may be located in the first row R1 in the folding portion. For example, the first line X2_1 of the second horizontal loop X2 may cross the folding portion 630 in the second direction DR2 while bypassing the second hole HL2 and the third hole HL3 along the second row R2, and the second line X2_2 of the second horizontal loop X2 may cross the folding portion 630 in the second direction DR2 while bypassing the first hole HL1 and the third hole HL3 along the first row R1.

The first line Y0_1 of the central vertical loop Y0 may be located in the first row R1 in the folding portion 630, and the second line Y0_2 of the central vertical loop Y0 may be located in the second row R2 in the folding portion 630. For example, the first line Y0_1 of the central vertical loop Y0 may cross the folding portion 630 in the second direction DR2 while bypassing the first hole HL1 and the third hole HL3 along the first row R1, and the second line Y0_2 of the central vertical loop Y0 may cross the folding portion 630 in the second direction DR2 while bypassing the second hole HL2 and the third hole HL3 along the second row R2.

The first line Y1_1 of the first vertical loop Y1 may be located in the first row R1 in the folding portion 630, and the second line Y1_2 of the first vertical loop Y1 may be located in the second row R2 in the folding portion 630. For example, the first line Y1_1 of the first vertical loop Y1 may cross the folding portion 630 in the second direction DR2 while bypassing the first hole HL1 and the third hole HL3 along the first row R1, and the second line Y1_2 of the first vertical loop Y1 may cross the folding portion 630 in the second direction DR2 while bypassing the second hole HL2 and the third hole HL3 along the second row R2.

The third line Y1_3 of the first vertical loop Y1 may be located in at least a part of the first row R1 in the folding portion 630, and the fourth line Y1_4 of the first vertical loop Y1 may be located in at least a part of the first row R1 in the folding portion 630. For example, the third line Y1_3 of the first vertical loop Y1 may cross the folding portion 630 in the second direction DR2 while bypassing the first hole HL1 and the third hole HL3 along the first row R1 and then extend in the first direction DR1, and the fourth line Y1_4 of the first vertical loop Y1 may cross the folding portion 630 in the second direction DR2 while bypassing the first hole HL1 and the third hole HL3 along the first row R1 and then extend in the first direction DR1.

For example, the third line Y1_3 and the fourth line Y1_4 of the first vertical loop Y1 may cross at least a part of the peripheral part MP of the folding portion 630 in the second direction DR2 and then extend in the first direction DR1. In this case, the third line Y1_3 and the fourth line Y1_4 of the first vertical loop Y1 may not be located at the central part CP of the folding portion 630. In the digitizer 600 and the display device 10 including the same according to some embodiments, the occurrence of cracks in the wiring may be minimized or relatively reduced by minimizing or relatively reducing the wiring arrangement at the central part CP where the folding stress is largest when the display device 10 is folded.

The first line Y2_1 of the second vertical loop Y2 may be located in the second row R2 in the folding portion 630, and the second line Y2_2 of the second vertical loop Y2 may be located in the first row R1 in the folding portion 630. For example, the first line Y2_1 of the second vertical loop Y2 may cross the folding portion 630 in the second direction DR2 while bypassing the second hole HL2 and the third hole HL3 along the second row R2, and the second line Y2_2 of the second vertical loop Y2 may cross the folding portion 630 in the second direction DR2 while bypassing the first hole HL1 and the third hole HL3 along the first row R1.

The third line Y2_3 of the second vertical loop Y2 may be located in at least a part of the first row R1 in the folding portion 630, and the fourth line Y2_4 of the second vertical loop Y2 may be located in at least a part of the first row R1 in the folding portion 630. For example, the third line Y2_3 of the second vertical loop Y2 may cross the folding portion 630 in the second direction DR2 while bypassing the first hole HL1 and the third hole HL3 along the first row R1 and then extend in the first direction DR1, and the fourth line Y2_4 of the second vertical loop Y2 may cross the folding portion 630 in the second direction DR2 while bypassing the first hole HL1 and the third hole HL3 along the first row R1 and then extend in the first direction DR1.

For example, the third line Y2_3 and the fourth line Y2_4 of the second vertical loop Y2 may cross at least a part of the peripheral part MP of the folding portion 630 in the second direction DR2 and then extend in the first direction DR1. In this case, the third line Y2_3 and the fourth line Y2_4 of the second vertical loop Y2 may not be located at the central part CP of the folding portion 630. In the digitizer 600 and the display device 10 including the same according to some embodiments, the occurrence of cracks in the wiring may be minimized or relatively reduced by minimizing or relatively reducing the wiring arrangement at the central part CP where the folding stress is largest when the display device 10 is folded.

The first line Y3_1 of the third vertical loop Y3 may be located in at least a part of the second row R2 in the folding portion 630, and the second line Y3_2 of the third vertical loop Y3 may be located in at least a part of the first row R1 in the folding portion 630. For example, the first line Y3_1 of the third vertical loop Y3 may cross the folding portion 630 in the second direction DR2 while bypassing the second hole HL2 and the third hole HL3 along the second row R2 and then extend in the first direction DR1, and the second line Y3_2 of the third vertical loop Y3 may cross the folding portion 630 in the second direction DR2 while bypassing the first hole HL1 and the third hole HL3 along the first row R1 and then extend in the first direction DR1.

For example, the first line Y3_1 and the second line Y3_2 of the third vertical loop Y3 may cross at least a part of the peripheral part MP of the folding portion 630 in the second direction DR2 and then extend in the first direction DR1. In this case, the first line Y3_1 and the second line Y3_2 of the third vertical loop Y3 may not be located at the central part CP of the folding portion 630. In the digitizer 600 and the display device 10 including the same according to some embodiments, the occurrence of cracks in the wiring may be minimized or relatively reduced by minimizing or relatively reducing the wiring arrangement at the central part CP where the folding stress is largest when the display device 10 is folded.

The first line Y4_1 of the fourth vertical loop Y4 may be located in at least a part of the second row R2 in the folding portion 630, and the second line Y4_2 of the fourth vertical loop Y4 may be located in at least a part of the first row R1 in the folding portion 630. For example, the first line Y4_1 of the fourth vertical loop Y4 may cross the folding portion 630 in the second direction DR2 while bypassing the second hole HL2 and the third hole HL3 along the second row R2 and then extend in the first direction DR1, and the second line Y4_2 of the fourth vertical loop Y4 may cross the folding portion 630 in the second direction DR2 while bypassing the first hole HL1 and the third hole HL3 along the first row R1 and then extend in the first direction DR1.

For example, the first line Y4_1 and the second line Y4_2 of the fourth vertical loop Y4 may cross at least a part of the peripheral part MP of the folding portion 630 in the second direction DR2 and then extend in the first direction DR1. In this case, the first line Y4_1 and the second line Y4_2 of the fourth vertical loop Y4 may not be located at the central part CP of the folding portion 630. In the digitizer 600 and the display device 10 including the same according to some embodiments, the occurrence of cracks in the wiring may be minimized or relatively reduced by minimizing or relatively reducing the wiring arrangement at the central part CP where the folding stress is largest when the display device 10 is folded.

The digitizer 600 according to some embodiments may include the first to third wiring layers F1, F2, and F3. In this case, a total of 18 lines (e.g., 6 * 3 layers) may be located between the first hole HL1 and the second hole HL2 in the first direction DR1.

According to some embodiments, as shown in FIG. 25A, the first line X1_1 and the second line X1_2 of the first horizontal loop X1, the first line X2_1 of the second horizontal loop X2, the first line Y1_1 of the first vertical loop Y1, and the first line Y2_1 of the second vertical loop Y2 may be located in the first wiring layer F1. The second line X2_2 of the second horizontal loop X2, the first line Y0_1 and the second line Y0_2 of the central vertical loop Y0, the second line Y1_2 of the first vertical loop Y1, and the second line Y2_2 of the second vertical loop Y2 may be located in the second wiring layer F2. The third line Y1_3 and the fourth line Y1_4 of the first vertical loop Y1, the third line Y2_3 and fourth line Y2_4 of the second vertical loop Y2, the first line Y3_1 and the second line Y3_2 of the third vertical loop Y3, and the first line Y4_1 and the second line Y4_2 of the fourth vertical loop Y4 may be located in the third wiring layer F3.

The above-described arrangement of the lines in the first row R1 and the second row R2 and the first to third wiring layers F1, F2, and F3 is shown in the following Table 2.

**Table 2**

| | First wiring layer (F1) | Second wiring layer (F2) | Third wiring layer (F3) |
|---|---|---|---|
| First row (R1) | X1_1, X1_2, Y1_1 | X2_2, Y0_1, Y2_2 | Left side: Y2_3, Y3_2, Y2_4 |
| | | | Right side: Y1_3, Y4_2, Y1_4 |
| Second row (R2) | X2_1, Y2_1 | Y0_2, Y1_2 | Left side: Y3_1 |
| | | | Right side: Y4_1 |

In the digitizer 600 according to some embodiments, the lines located in the short side among the lines of the vertical loops Y0, Y1, Y2, Y3, and Y4 are evenly located in the first row R1 and the second row R2, thereby preventing or reducing instances of an unrecognized area occurring in an area adjacent to one end 600a of the digitizer 600 in the first direction DR1 and relatively improving the sensing uniformity.

For example, by arranging the lines located in the short side among the lines of the vertical loops Y0, Y1, Y2, Y3, and Y4 in equal numbers in the first row R1 and the second row R2 as in the case of arranging the first line Y1_1 of the first vertical loop Y1 in the first row R1 and arranging the second line Y1_2 thereof in the second row R2, it may be possible to prevent or reduce the occurrence of an unrecognized area and relatively improve the sensing uniformity.

However, the arrangement of the lines of the vertical loops Y0, Y1, Y2, Y3, and Y4, which are arranged in equal numbers in the first row R1 and the second row R2, is not limited to the illustration in the drawing and the Table 1. For example, the first line Y0_1 of the central vertical loop Y0 may be located in the second row R2, and the second line Y0_2 thereof may be located in the first row R1.

In some embodiments, among the lines passing through the folding portion 630, the vertical lines of the first to fourth vertical loops Y1, Y2, Y3, and Y4 may be located in a lowermost layer. Among the lines passing through the folding portion 630, the horizontal lines of the horizontal loops X1, X2, and X3, and the horizontal lines of the central vertical loop Y0 and the first and second vertical loops Y1 and Y2 may be located in a layer higher than the lowermost layer.

The lowermost layer may refer to a layer arranged close to a surface exposed to the outside between one surface and the other surface (or top surface and bottom surface) of the display device 10 when the display device 10 is folded. For example, in FIG. 25B, if the surface adjacent to the first wiring layer F1 is a surface that is folded inward when the display device 10 is folded, and the surface adjacent to the third wiring layer F3 is a surface exposed to the outside, the third wiring layer F3 may be the lowermost layer.

The lowermost layer is a surface that is located outermost when the display device 10 is folded, and thus may have a folding radius larger than that of another layer. Accordingly, the folding stress applied to the line located in the lowermost layer may be large.

In the digitizer 600 and the display device 10 including the same according to some embodiments, the vertical lines of the first to fourth vertical loops Y1, Y2, Y3, and Y4 among the lines passing through the folding portion 630 are located in the lowermost layer, and the horizontal lines of the horizontal loops X1, X2, and X3, and the horizontal lines of the central vertical loop Y0 and the first and second vertical loops Y1 and Y2 among the lines passing through the folding portion 630 are located in a layer higher than the lowermost layer, so that the occurrence of cracks in the wiring in the folding portion 630 may be minimized or relatively reduced.

For example, as shown in FIG. 25A, the first line X1_1 and the second line X1_2 of the first horizontal loop X1, the first line X2_1 and the second line X2_2 of the second horizontal loop X2, the first line Y0_1 and the second line Y0_2 of the central vertical loop Y0, the first line Y1_1 and the second line Y1_2 of the first vertical loop Y1, and the first line Y2_1 and the second line Y2_2 of the second vertical loop Y2 may be located in layers (e.g., the first and second wiring layers F1 and F2) higher than the lowermost layer. On the other hand, the third line Y1_3 and the fourth line Y1_4 of the first vertical loop Y1, the third line Y2_3 and the fourth line Y2_4 of the second vertical loop Y2, the first line Y3_1 and the second line Y3_2 of the third vertical loop Y3, and the first line Y4_1 and the second line Y4_2 of the fourth vertical loop Y4 may be located in the lowermost layer (e.g., the third wiring layer F3).

Further, the folding stress is larger at the central part CP of the folding portion 630 than at the peripheral part MP thereof, so that the central part CP of the lowermost layer may be a portion where the folding stress is largest. Because the above-described vertical lines are located in the lowermost layer and the above-described vertical lines are located only at the peripheral part MP except the central part CP, the occurrence of cracks in the wiring may be further minimized or relatively reduced.

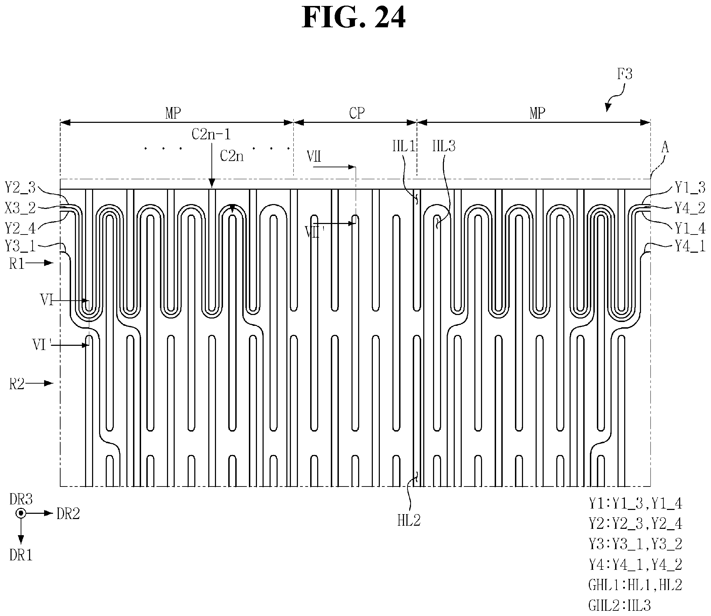

For example, as shown in FIG. 24, the third line Y1_3 and the fourth line Y1_4 of the first vertical loop Y1, the third line Y2_3 and the fourth line Y2_4 of the second vertical loop Y2, the first line Y3_1 and the second line Y3_2 of the third vertical loop Y3, and the first line Y4_1 and the second line Y4_2 of the fourth vertical loop Y4 may be located only at the peripheral part MP, and may not be located at the central part CP. Accordingly, as shown in FIG. 25B, no line may be located in the lowermost layer, e.g., at the central part CP of the third wiring layer F3. Therefore, no line is located at the central part CP of the lowermost layer where the folding stress is largest, so that the occurrence of cracks in the wiring may be minimized or relatively reduced.

Meanwhile, similarly to the embodiments described above with reference to FIG. 17 and the like, the arrangement of the respective lines for the first and second wiring layers F1 and F2 is not limited to the illustration in the drawing and the Table 2.

For example, although it is illustrated that the first line X1_1 and the second line X1_2 of the first horizontal loop X1, the first line X2_1 of the second horizontal loop X2, the first line Y1_1 of the first vertical loop Y1, and the first line Y2_1 of the second vertical loop Y2 are located in the first wiring layer F1, embodiments according to the present disclosure are not limited thereto and they may be located in the second wiring layer F2.

For another example, although it is illustrated that the second line X2_2 of the second horizontal loop X2, the first line Y0_1 and the second line Y0_2 of the central vertical loop Y0, the second line Y1_2 of the first vertical loop Y1, and the second line Y2_2 of the second vertical loop Y2 are located in the second wiring layer F2, embodiments according to the present disclosure are not limited thereto and they may be located in the first wiring layer F1.

In concluding the detailed description, those skilled in the art will appreciate that many variations and modifications can be made to the disclosed embodiments without departing from the scope of the appended claims. Therefore, the disclosed embodiments of the present disclosure are used in a generic and descriptive sense only and not for purposes of limitation.

Embodiments are set out in the following numbered clauses:
1. A digitizer comprising:
   a folding portion comprising a first hole, a second hole arranged on one side of the first hole in a first direction, and a third hole arranged on one side of the first hole and the second hole in a second direction different from the first direction;
   a first non-folding portion on a first side of the folding portion in the second direction;
   a second non-folding portion on a second side of the folding portion, opposite the first side of the folding portion, in the second direction;
   a first loop group containing a plurality of loops having a long side in the first direction; and
   a second loop group containing a plurality of loops having a long side in the second direction, wherein
   the folding portion comprises a first row in which the first hole and the third hole overlap in the second direction and a second row in which the second hole and the third hole overlap in the second direction,
   among the plurality of loops contained in the first loop group, each of a plurality of loops which at least partially overlap the folding portion comprises a plurality of lines crossing the folding portion along the first row or the second row, and
   the plurality of lines are arranged in equal numbers in the first row and the second row.
2. The digitizer of clause 1, wherein the first loop group contains a first loop, and
   a long side of the first loop overlaps the first non-folding portion and the second non-folding portion.
3. The digitizer of clause 2, wherein a part of a short side of the first loop is in the first row, and
   a remaining part of the short side of the first loop is in the second row
4. The digitizer of clause 2 or clause 3, wherein
   the first loop group contains a second loop, and
   a part of a long side of the second loop overlaps the first non-folding portion, and a remaining part thereof overlaps the folding portion.
5. The digitizer of clause 4, wherein a part of a short side of the second loop is in the first row, and a remaining part of the short side of the second loop is in the second row.
6. The digitizer of clause 4 or clause 5, wherein a part of a long side of the second loop overlapping the folding portion crosses at least a part of the first row, and a remaining part of the long side of the second loop overlapping the folding portion crosses at least a part of the second row.
7. The digitizer of any of clauses 4 to 6, wherein
   the second loop group contains a third loop, and
   a long side of the third loop is in the first row.
8. The digitizer of clause 7, wherein
   the second loop group contains a fourth loop, and
   a part of a long side of the fourth loop is in the first row, and a remaining part of the long side of the fourth loop is in the second row.
9. The digitizer of any preceding clause, further comprising:
   at least one base layer containing a reinforcing fiber; and
   at least one wiring layer on the base layer, wherein
   the plurality of loops of each of the first loop group and the second loop group comprise a plurality of lines extending in the first direction and the second direction, respectively, and
   the plurality of lines are in the wiring layer.
10. The digitizer of clause 9, wherein
   the base layer comprises a first base layer, a second base layer on a first surface of the first base layer, and a third base layer on a second surface of the first base layer,
   the wiring layer comprises a first wiring layer between the first base layer and the second base layer, a second wiring layer between the first base layer and the third base layer, and a third wiring layer on the second base layer, and
   the plurality of lines are distributed and located in the first to third wiring layers.
11. The digitizer of clause 10, wherein a maximum number of the plurality of lines in any one of the first to third wiring layers and between the first hole and the second hole in the first direction is six.
12. The digitizer of clause 10 or clause 11, wherein
   the wiring layer further comprises a fourth wiring layer on the third base layer, and
   a maximum number of the plurality of lines in any one of the first to fourth wiring layers and between the first hole and the second hole in the first direction is four.
13. The digitizer of any of clauses 9 to 12, wherein the reinforcing fiber is glass fiber-reinforced plastic.
14. The digitizer of any preceding clause, wherein each of the plurality of loops contained in the first loop group and the second loop group comprises at least two or more rings.
15. A display device comprising:
   a display panel; and
   a digitizer on the display panel, and comprising a folding portion comprising a first hole in a first row and a second hole in a second row located on one side of the first row in a first direction, a first loop group comprising a plurality of loops having a long side in the first direction, and a second loop group comprising a plurality of loops having a long side in a second direction different from the first direction,
   wherein among the plurality of loops contained in the first loop group, each of a plurality of loops which at least partially overlap the folding portion comprises a plurality of lines crossing the folding portion along the first row or the second row, and
   the plurality of lines are arranged in equal numbers in the first row and the second row.
16. A digitizer comprising:
   a folding portion comprising a central part extending in a first direction, and a peripheral part on both sides of the central part in a second direction different from the first direction;
   a first loop group containing a plurality of loops having a long side in the first direction;
   a second loop group containing a plurality of loops having a long side in the second direction;
   at least one base layer containing a reinforcing fiber; and
   a plurality of wiring layers on the base layer, wherein
   among the plurality of loops contained in the first loop group, each of a plurality of loops which at least partially overlap the folding portion comprises a long-side line extending in the first direction and a short-side line extending in the second direction,
   among the plurality of loops contained in the second loop group, each of a plurality of loops which at least partially overlap the folding portion comprises a long-side line extending in the second direction,
   the long-side line and the short-side line comprised in the first loop group, and the long-side line in the second loop group are in the plurality of wiring layers, and
   the long-side line comprised in the first loop group is in a lowermost layer among the plurality of wiring layers.
17. The digitizer of clause 16, wherein the long-side line comprised in the first loop group is in the peripheral part.
18. The digitizer of clause 17, wherein the long-side line comprised in the first loop group crosses the peripheral part in the second direction and then extends in the first direction.
19. The digitizer of any of clauses 16 to 18, wherein the short-side line comprised in the first loop group and the long-side line comprised in the second loop group are in a layer higher than the lowermost layer.
20. The digitizer of any of clauses 16 to 19, wherein no line is at a central part of the lowermost layer.
21. The digitizer of any of clauses 16 to 20, wherein
   the base layer comprises a first base layer, a second base layer on a first surface of the first base layer, and a third base layer on a second surface of the first base layer,
   the wiring layers comprise a first wiring layer between the first base layer and the second base layer, a second wiring layer between the first base layer and the third base layer, and a third wiring layer on the second base layer, and
   the long-side line comprised in the first loop group is in the second wiring layer.
22. The digitizer of any of clauses 16 to 21, wherein
   the base layer comprises a first base layer, a second base layer on a first surface of the first base layer, and a third base layer on a second surface of the first base layer,
   the wiring layers comprise a first wiring layer between the first base layer and the second base layer, a second wiring layer between the first base layer and the third base layer, a third wiring layer on the second base layer, and a fourth wiring layer on the third base layer, and
   the long-side line comprised in the first loop group is in the fourth wiring layer.
23. The digitizer of any of clauses 16 to 22, wherein the lowermost layer is a layer adjacent to a surface facing outward when the folding portion is folded among the plurality of wiring layers.
24. A display device comprising:
   a display panel; and
   a digitizer on the display panel,
   wherein the digitizer comprises:
      a folding portion comprising a central part, and a peripheral part on both sides of the central part;
      a first loop group containing a plurality of loops having a long side in a first direction;
      a second loop group containing a plurality of loops having a long side in a second direction different from the first direction;
      at least one base layer containing a reinforcing fiber; and
      a plurality of wiring layers on the base layer, wherein
      among the plurality of loops contained in the first loop group, each of a plurality of loops which at least partially overlap the folding portion comprises a long-side line extending in the first direction and a short-side line extending in the second direction,
      among the plurality of loops contained in the second loop group, each of a plurality of loops which at least partially overlap the folding portion comprises a long-side line extending in the second direction,
      the long-side line and the short-side line comprised in the first loop group, and the long-side line comprised in the second loop group are in the plurality of wiring layers, and
      the long-side line comprised in the first loop group is in a lowermost layer among the plurality of wiring layers.

## Claims

1. A digitizer for a display device, comprising:
a folding portion comprising a first hole, a second hole arranged on one side of the first hole in a first direction, and a third hole arranged on one side of the first hole and the second hole in a second direction different from the first direction;
a first non-folding portion on a first side of the folding portion in the second direction;
a second non-folding portion on a second side of the folding portion, opposite the first side of the folding portion, in the second direction;
a first loop group containing a plurality of loops having a long side in the first direction; and
a second loop group containing a plurality of loops having a long side in the second direction, wherein
the folding portion comprises a first row in which the first hole and the third hole overlap in the second direction and a second row in which the second hole and the third hole overlap in the second direction,
among the plurality of loops contained in the first loop group, each of a plurality of loops which at least partially overlap the folding portion comprises a plurality of lines crossing the folding portion along the first row or the second row, and
the plurality of lines are arranged in equal numbers in the first row and the second row.

2. The digitizer of claim 1, wherein the first loop group contains a first loop, and
a long side of the first loop overlaps the first non-folding portion and the second non-folding portion.

3. The digitizer of claim 2, wherein a part of a short side of the first loop is in the first row, and
a remaining part of the short side of the first loop is in the second row

4. The digitizer of claim 2 or claim 3, wherein
the first loop group contains a second loop, and
a part of a long side of the second loop overlaps the first non-folding portion, and a remaining part thereof overlaps the folding portion,
and optionally wherein a part of a short side of the second loop is in the first row, and a remaining part of the short side of the second loop is in the second row.

5. The digitizer of claim 4, wherein a part of a long side of the second loop overlapping the folding portion crosses at least a part of the first row, and a remaining part of the long side of the second loop overlapping the folding portion crosses at least a part of the second row.

6. The digitizer of claim 4 or claim 5, wherein
the second loop group contains a third loop, and
a long side of the third loop is in the first row.

7. The digitizer of claim 6, wherein
the second loop group contains a fourth loop, and
a part of a long side of the fourth loop is in the first row, and a remaining part of the long side of the fourth loop is in the second row.

8. The digitizer of any preceding claim, further comprising:
at least one base layer containing a reinforcing fiber, the reinforcing fiber optionally being glass fiber-reinforced plastic; and
at least one wiring layer on the base layer, wherein
the plurality of loops of each of the first loop group and the second loop group comprise a plurality of lines extending in the first direction and the second direction, respectively, and
the plurality of lines are in the wiring layer.

9. The digitizer of claim 8, wherein
the base layer comprises a first base layer, a second base layer on a first surface of the first base layer, and a third base layer on a second surface of the first base layer,
the wiring layer comprises a first wiring layer between the first base layer and the second base layer, a second wiring layer between the first base layer and the third base layer, and a third wiring layer on the second base layer, and
the plurality of lines are distributed and located in the first to third wiring layers,
and optionally wherein a maximum number of the plurality of lines in any one of the first to third wiring layers and between the first hole and the second hole in the first direction is six.

10. The digitizer of claim 9, wherein
the wiring layer further comprises a fourth wiring layer on the third base layer, and
a maximum number of the plurality of lines in any one of the first to fourth wiring layers and between the first hole and the second hole in the first direction is four.

11. The digitizer of any preceding claim, wherein each of the plurality of loops contained in the first loop group and the second loop group comprises at least two or more rings.

12. A display device comprising:
a display panel; and
a digitizer on the display panel, and comprising a folding portion comprising a first hole in a first row and a second hole in a second row located on one side of the first row in a first direction, a first loop group comprising a plurality of loops having a long side in the first direction, and a second loop group comprising a plurality of loops having a long side in a second direction different from the first direction,
wherein among the plurality of loops contained in the first loop group, each of a plurality of loops which at least partially overlap the folding portion comprises a plurality of lines crossing the folding portion along the first row or the second row, and
the plurality of lines are arranged in equal numbers in the first row and the second row.

13. A digitizer for a display device, comprising:
a folding portion comprising a central part extending in a first direction, and a peripheral part on both sides of the central part in a second direction different from the first direction;
a first loop group containing a plurality of loops having a long side in the first direction;
a second loop group containing a plurality of loops having a long side in the second direction;
at least one base layer containing a reinforcing fiber; and
a plurality of wiring layers on the base layer, wherein
among the plurality of loops contained in the first loop group, each of a plurality of loops which at least partially overlap the folding portion comprises a long-side line extending in the first direction and a short-side line extending in the second direction,
among the plurality of loops contained in the second loop group, each of a plurality of loops which at least partially overlap the folding portion comprises a long-side line extending in the second direction,
the long-side line and the short-side line comprised in the first loop group, and the long-side line in the second loop group are in the plurality of wiring layers, and
the long-side line comprised in the first loop group is in a lowermost layer among the plurality of wiring layers.

14. The digitizer of claim 13, wherein the long-side line comprised in the first loop group is in the peripheral part,
and optionally wherein the long-side line comprised in the first loop group crosses the peripheral part in the second direction and then extends in the first direction.

15. The digitizer of claim 13 or claim 14, wherein the short-side line comprised in the first loop group and the long-side line comprised in the second loop group are in a layer higher than the lowermost layer.

16. The digitizer of any of claims 13 to 15, wherein no line is at a central part of the lowermost layer.

17. The digitizer of any of claims 13 to 16, wherein
the base layer comprises a first base layer, a second base layer on a first surface of the first base layer, and a third base layer on a second surface of the first base layer,
the wiring layers comprise a first wiring layer between the first base layer and the second base layer, a second wiring layer between the first base layer and the third base layer, and a third wiring layer on the second base layer, and
the long-side line comprised in the first loop group is in the second wiring layer.

18. The digitizer of any of claims 13 to 17, wherein
the base layer comprises a first base layer, a second base layer on a first surface of the first base layer, and a third base layer on a second surface of the first base layer,
the wiring layers comprise a first wiring layer between the first base layer and the second base layer, a second wiring layer between the first base layer and the third base layer, a third wiring layer on the second base layer, and a fourth wiring layer on the third base layer, and
the long-side line comprised in the first loop group is in the fourth wiring layer.

19. The digitizer of any of claims 13 to 18, wherein the lowermost layer is a layer adjacent to a surface facing outward when the folding portion is folded among the plurality of wiring layers.

20. A display device comprising:
a display panel; and
a digitizer on the display panel,
wherein the digitizer comprises:
a folding portion comprising a central part, and a peripheral part on both sides of the central part;
a first loop group containing a plurality of loops having a long side in a first direction;
a second loop group containing a plurality of loops having a long side in a second direction different from the first direction;
at least one base layer containing a reinforcing fiber; and
a plurality of wiring layers on the base layer, wherein
among the plurality of loops contained in the first loop group, each of a plurality of loops which at least partially overlap the folding portion comprises a long-side line extending in the first direction and a short-side line extending in the second direction,
among the plurality of loops contained in the second loop group, each of a plurality of loops which at least partially overlap the folding portion comprises a long-side line extending in the second direction,
the long-side line and the short-side line comprised in the first loop group, and the long-side line comprised in the second loop group are in the plurality of wiring layers, and
the long-side line comprised in the first loop group is in a lowermost layer among the plurality of wiring layers.
